# EUROPEAN PATENT SPECIFICATION

(11) **EP 4 045 394 B1**
(45) Date of publication and mention of the grant of the patent: **26.02.2025**
(21) Application number: 19797320.9
(22) Date of filing: 16.10.2019
(51) Int. Cl.: B63B 79/15, B63B 79/30, B63B 79/40, B63H 25/42

(54) **COMPUTER-IMPLEMENTED METHOD FOR OPTIMIZING MARINE VESSEL THRUST ALLOCATION FOR PLURALITY OF THRUSTER UNITS**
COMPUTERIMPLEMENTIERTES VERFAHREN ZUR OPTIMIERUNG DER ZUORDNUNG EINES SCHIFFSANTRIEBS FÜR MEHRERE TRIEBWERKE
PROCÉDÉ MIS EN OEUVRE PAR ORDINATEUR POUR OPTIMISER L'ATTRIBUTION DE POUSSÉE DE NAVIRE MARIN POUR UNE PLURALITÉ D'UNITÉS DE PROPULSEURS

(43) Date of publication of application: 24.08.2022
(73) Proprietor: Wärtsilä Finland Oy, 65170 Vaasa (FI)
(72) Inventor: BULTEN, Norbert, 65100 Vaasa (FI)
(74) Representative: Berggren Oy
(86) International application number: PCT/FI2019/050739
(87) International publication number: WO 2021/074483

(56) References cited:
- WO-A1-2012/080241
- WO-A1-2018/228696
- CN-A- 102 508 431
- CN-A- 102 968 116
- CN-A- 103 823 372

## Description

### TECHNICAL FIELD

The present application generally relates to a computer-implemented method, system and an apparatus for optimizing marine vessel thrust allocation for plurality of thruster units.

### BACKGROUND

This section illustrates useful background information without admission of any technique described herein representative of the state of the art.

Dynamic positioning (DP) is known. It involves automatic or semi-automatic control of a marine vessel's position and heading by using its own propellers and thrusters with respect to one or more position references. Typically, the intention is to keep the vessel's position fixed within given parameters. Dynamic positioning (DP) is utilized e.g. in offshore drilling operations, for example.

Autopilots are also known. The autopilot (also known as self-steering) is an automatic device or system that guides or maintains a marine vessel's chosen course so that constant 'hands-on' control by a human operator is not necessarily required.

Automatic radar plotting aid is also known. That can be utilized in calculating a tracked object's course, speed and closest point of approach to detect if there is a danger of collision with another ship or landmass, for example.

However, optimizing marine vessel thrust allocation for plurality of thruster units is still needed.

Thus, a solution is needed to enable accurate, efficient, and reliable method for optimizing marine vessel thrust allocation for plurality of thruster units, is needed.

In related art, WO 2018/228696 A1 discloses an approach for controlling marine vessel: obtaining motion data related to the marine vessel; obtaining an operation state related to one or more apparatuses exerting force from the marine vessel to ambient water; detecting a disturbance in one or more degrees of freedom affecting the marine vessel based on the motion data; and determining control data for the one or more apparatuses exerting force to attenuate the detected disturbance.

### SUMMARY

Various aspects of examples of the invention are set out in the claims.

According to a first example aspect of the present invention, there is provided a computer-implemented method for optimizing marine vessel thrust allocation for a plurality of thruster units, the method comprising:
receiving marine vessel characteristics and thruster unit location information;
determining performance profile in view of different azimuth degrees for each thruster unit based on the marine vessel characteristics and thruster unit location information, wherein the performance profile comprises thruster restriction zone information;
receiving environmental information;
generating a hydrodynamic thrust model by combining performance profiles of active thruster units and the environmental information; and
determining thrust vector information for each active thruster unit based on the hydrodynamic thrust model,
wherein method comprises determining thruster-hull interference values through 360 azimuth degrees for each thruster unit based on the hydrodynamic thrust model.

In an embodiment, the marine vessel characteristics comprises at least one of the following: transverse area information of a marine vessel superstructure; lateral area information of the marine vessel superstructure; length information of the marine vessel; midship beam information of the marine vessel; perpendicular length information of the marine vessel; and midship draught information of the marine vessel.

In an embodiment, the environmental information comprises at least one of the following: wind direction information; wind velocity information; air density information; current direction information; current velocity information; water density information; wave direction information; wave spectrum information; gravity information; water salinity; water depth information; and wave amplitude information.

In an embodiment, the thruster unit location information comprises at least one of the following: position of the thruster unit in at least two horizontal dimensions relative to a hull of the marine vessel; thruster tilt angle information; and thruster vertical position relative to the hull of the marine vessel.

In an embodiment, the method further comprises:
determining allowed azimuth angle information for each thruster unit based on the performance profile; and
providing the allowed azimuth angle information as input to the hydrodynamic thrust model.

In an embodiment, the method further comprises:
receiving steering information;
determining thrust vector information based on the steering information and the hydrodynamic thrust model; and
controlling at least one thrust unit based on the thrust vector information.

In an embodiment, the steering information comprising at least one of steering angle information and speed information.

In an embodiment, the hydrodynamic thrust model is configured to optimize marine vessel thrust allocation through 360 azimuth degrees for each thruster unit.

In an embodiment, the method further comprises determining thruster-thruster interference values through 360 azimuth degrees for each thruster unit based on the hydrodynamic thrust model.

In an embodiment, the method further comprises generating a digital twin for the marine vessel based on the hydrodynamic thrust model.

In an embodiment, the digital twin is configured to model operation of the plurality of thruster units arranged to the marine vessel.

In an embodiment, the method further comprises:
receiving data from a plurality of sensors by changing orientation of each thruster unit so that steering angle of the marine vessel is maintained;
determining side force information and yaw moment information for each thruster unit; and
determining optimum thrust vector information for each thrust unit using the hydrodynamic thrust model, the side force information and the yaw moment information.

In an embodiment, the hydrodynamic thrust model comprises a neural network, and the method further comprising:
receiving data from a plurality of sensors operationally arranged to the marine vessel to provide sensor data and maintaining the sensor data within a data storage system;
determining historical data based on the sensor data; and
providing the historical data as input to the neural network.

In an embodiment, the method further comprises:
generating predicted data for a subset of the plurality of sensors as output by the neural network;
combining the predicted data with actual data for the subset of the plurality of sensors to provide error data, wherein the actual data is determined from the sensor data of the data storage system based on association to the subset of the plurality of sensors; and
updating the hydrodynamic thrust model based on the error data.

In an embodiment, the method further comprises detecting an anomaly based on the error data.

In an embodiment, the method further comprises determining trending data and/or fouling data based on the anomaly.

In an embodiment, the trending data or the fouling data relate to operation of a thruster unit, an engine or a vessel hull.

In an embodiment, the fouling data indicates nonoptimal operation due to fouling.

In an embodiment, the fouling data is configured to automatically trigger predictive maintenance request.

In an embodiment, the neural network is trained by means of signals from individual sensors for determining internal neural network parameters.

In an embodiment, the neural network is configured to simulate the predicted data correlating with the history data, and the neural network is adjusted to the sensor data by means of a training function.

In an embodiment, the method further comprises:
receiving reference data from a remote apparatus comprising a plurality of reference sensors operationally arranged to a reference marine vessel to provide reference sensor data;
determining reference historical data based on the reference sensor data; and
providing the reference historical data as input to the neural network.

In an embodiment, the method further comprises:
receiving data from a plurality of sensors operationally arranged to the marine vessel to provide sensor data and maintaining the sensor data within a data storage system;
determining side force information and yaw moment information for each thruster unit based on the received data; and
determining optimum thrust vector information for each thrust unit using the hydrodynamic thrust model, the side force information and the yaw moment information, by minimizing the side force information and the yaw moment information according to the sensor data.

In an embodiment, the hydrodynamic thrust model is configured to determine unit specific thrust vector information; determine total generated thrust information for all thruster units as a function of a thruster azimuth angle; and determine generated side-force and vessel yaw-moment based on the total generated thrust information.

In an embodiment, the hydrodynamic thrust model is further configured to determine, for each thruster unit, an impact of a dynamic adjustment of steering angle on the side-force and on the yaw-moment.

In an embodiment, based on the determined impact for the dynamic adjustment of different angles, an optimal adjustment for each thruster unit is selected.

In an embodiment, the dynamic adjustment is repeated until resulting with minimum side-force and yaw-moment.

According to a second example aspect of the present invention, there is provided a control apparatus for optimizing marine vessel thrust allocation for a plurality of thruster units, comprising:
a communication interface;
at least one processor; and
at least one memory including computer program code;
the at least one memory and the computer program code configured to, with the at least one processor, cause the apparatus to:
   receive marine vessel characteristics and thruster unit location information;
   determine performance profile in view of different azimuth degrees for each thruster unit based on the marine vessel characteristics and thruster unit location information, wherein the performance profile comprises thruster restriction zone information;
   receive environmental information;
   generate a hydrodynamic thrust model by combining performance profiles of active thruster units and the environmental information; and
   determine thrust vector information for each active thruster unit based on the hydrodynamic thrust model,
wherein the apparatus is caused to determine thruster-hull interference values through 360 azimuth degrees for each thruster unit based on the hydrodynamic thrust model.

According to a third example aspect of the present invention, there is provided a computer program embodied on a computer readable medium comprising computer executable program code, which code, when executed by at least one processor of an apparatus, causes the apparatus to:
receive marine vessel characteristics and thruster unit location information;
determine performance profile in view of different azimuth degrees for each thruster unit based on the marine vessel characteristics and thruster unit location information, wherein the performance profile comprises thruster restriction zone information;
receive environmental information;
generate a hydrodynamic thrust model by combining performance profiles of active thruster units and the environmental information; and
determine thrust vector information for each active thruster unit based on the hydrodynamic thrust model,
wherein the apparatus is caused to determine thruster-hull interference values through 360 azimuth degrees for each thruster unit based on the hydrodynamic thrust model.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic picture of a marine vessel and a marine vessel data system according to an example embodiment;
Fig. 2 presents an example block diagram of a control apparatus (within a marine vessel, for example) in which various embodiments of the invention may be applied;
Fig. 3a shows a cross layout configuration for thruster units implemented in a drill-rig according to an example embodiment of the invention;
Fig. 3b shows a circular layout configuration for thruster units implemented in a drill-rig according to an example embodiment of the invention;
Fig. 4 shows a schematic picture of a computer implemented method and system for optimizing marine vessel thrust allocation for a plurality of thruster units, comprising a hydrodynamic thrust model (HDTM) according to an example embodiment;
Fig. 5 presents an example block diagram of a control apparatus and a hydrodynamic thrust model (HDTM) arranged in a marine vessel, such as a drill-rig in which various embodiments of the invention may be applied;
Fig. 6 presents an example schematic diagram of operational phases and data items related to the hydrodynamic thrust model (HDTM), in which various embodiments of the invention may be applied;
Fig. 7 shows a flow diagram showing operations in accordance with an example embodiment of the invention;
Fig. 8 shows a schematic picture of a hydrodynamic thrust model (HDTM) and related information flows according to an example embodiment; and
Fig. 9 shows a schematic picture of a closed loop controller block diagram 1000 according to an example embodiment of the invention.

### DETAILED DESCRIPTION OF THE DRAWINGS

In the following description, like numbers denote like elements.

Embodiments of the invention relate to computer-implemented method for optimizing marine vessel thrust allocation for a plurality of thruster units.

Building blocks such as sensor processing, guidance and control logic, thruster allocation etc. exist for automated vessel control. However, different embodiments disclosed show technical effects on areas of guidance, controls, sensor processing, estimation and thruster allocation, especially when controlling thruster units in automated or autonomous manner.

Optimizing marine vessel thrust allocation for plurality of thruster units is needed. It requires that hydrodynamic performance of thrusters, thruster-hull interaction losses and thruster-thruster interaction losses need to be taken into account over 360-degree circumference of each propulsion unit (referred to as thruster unit).

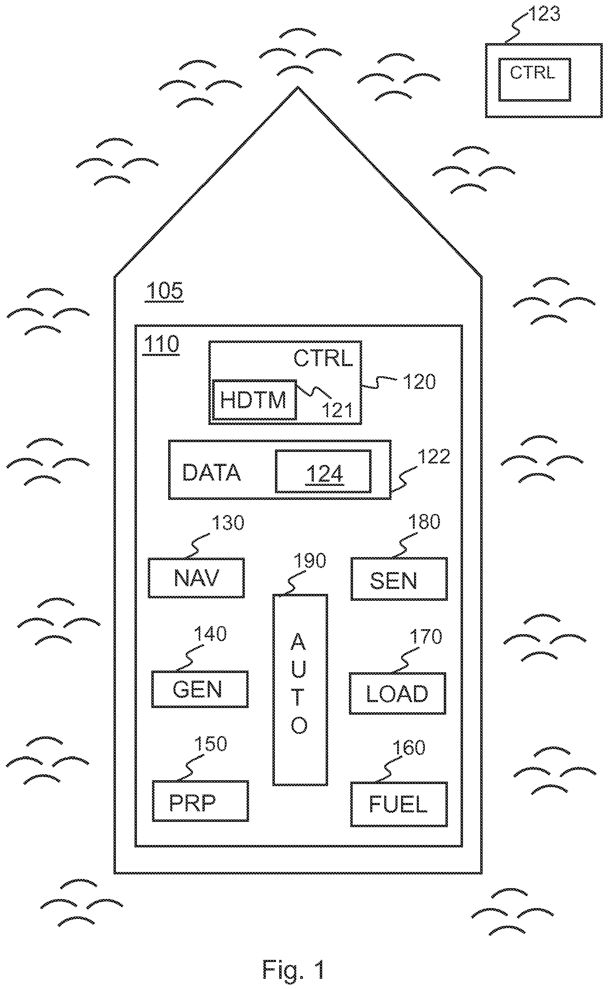

Fig. 1 shows a schematic picture of a marine vessel 105 and a marine vessel data system 110 according to an example embodiment.

The marine vessel data system 110 comprises a control apparatus 120 configured to provide and operate an a hydrodynamic thrust model (HDTM) 121 or at least part of the operations needed for the hydrodynamic thrust model (HDTM) 121, such as providing sensor data from the marine vessel data system 100 to and edge or a remote server apparatus where the hydrodynamic thrust model (HDTM) 121 is configured to be maintained and operated.

When operating a marine vessel 105 with a plurality of sensors operationally connected to the marine vessel data system 110, data 122 is generated. Data 122 may be received from the plurality of sensors operationally arranged to the marine vessel 105 to provide sensor data 124. The sensor data 124 may be maintained within a data storage system. The data 122 may also comprise data from various data sources within the marine vessel data system 110, such as computer systems or communication systems, for example.

The hydrodynamic thrust model (HDTM) 121 may be maintained and operated by the control apparatus 120 and receives data 122 as input. Further inputs may be provided from various data sources, internal or external, as well as operational or environmental, as discussed throughout the description. Alternatively, the hydrodynamic thrust model (HDTM) 121 may be maintained and operated by an edge or a remote server apparatus and receive input data 122 from the control apparatus 120. In such scenario the hydrodynamic thrust model (HDTM) 121 illustrated in Fig. 1 may be the plain data collection point or collection unit to provide the data to the remote server apparatus for the actual hydrodynamic thrust model (HDTM) 121.

In an embodiment, the hydrodynamic thrust model (HDTM) 121 utilizes a neural network to predict signal behavior of equipment within the marine vessel 105 with the goal of detecting abnormal thruster based behavior within the marine vessel data system 110, for example.

In an embodiment, by establishing an extended interface between the hydrodynamic thrust model (HDTM) 121 (or data collection unit in case the HDTM model is operated at remote server apparatus) and other systems like the navigation system 130, automation system 190, power generation system 140, propulsion system 150, fuel system 160, energy load system 170 and auxiliary sensor system 180, for example, it is possible to gather vast amount of complex input data for hydrodynamic thrust model (HDTM) 121 to process, learn, predict and detect.

The power generation system 140 may comprise different power generation sources, such as engines operating with diesel oil, LNG, LPG, synthetic fuels or like.

Propulsion system 150 may be configured to change the propulsion energy source (e.g. electric motor powering the propulsion wherein the energy source for the energy motor is changed), or for activating exhaust gas cleaning system (e.g. scrubber and/or SCR), for example. Propulsion system 150 may be associated a plurality of sensors to provide individual thruster unit based data, such as RPM and torque of the thruster unit in the propulsion system 150. Sensor data 124 from the thruster units of the propulsion system 150 may illustrated as part of the data 122 used for the hydrodynamic thrust model (HDTM) 121 to carry out embodiments of the invention.

Needed input data, such as marine vessel characteristics may be maintained as part of the data 122 or within the control apparatus 120. Thruster unit location information may be maintained also as part of the data 122, within control apparatus 120, or provided by the propulsion system 150, for example. Performance profile comprising thruster restriction zone information may be maintained as part of the data 122 or within the control apparatus 120. Environmental information may be maintained within the control apparatus, as part of the data 122 or received from the navigation system 130, for example.

By establishing a hydrodynamic thrust model (HDTM) 121 (or data collection unit or point for the remote HDTM) for communicating between systems 120-190 it is possible to use artificial neural networks as computing systems. The neural network within the hydrodynamic thrust model (HDTM) 121 itself may not be a single algorithm but a framework for many different machine learning algorithms to work together and process complex data inputs. Such systems learn to perform tasks by considering a lot of examples.

The neural network of the hydrodynamic thrust model (HDTM) 121 is configured to learn to reconstruct each data signal of the data 122 from an equipment of the system 110, based on all other data signals of the data 122.

Based on the difference between the reconstruction of a data signal and the actual signal, abnormal sensor behavior, such as thruster unit behavior, can be detected, as discussed in the description.

Uniqueness of the embodiments are based on the fact that, in general, the approach to anomaly detection is different. Essential feature is to use a neural network within the hydrodynamic thrust model (HDTM) 121 to reconstruct (historical) data of the data 122 and compare it to actual data of the data 122 with the goal of detecting deviations (abnormal, anomalous behavior like side force or yaw-moment) in the marine vessel 105. This will be discussed more in relation to following figures and associated description.

In an embodiment, for the marine vessel 105 related anomaly detection, top priority for detection may be defined to be safety, and second and third priority can be set by the ship operator (fuel consumption, speed/time, etc.), for example. The hydrodynamic thrust model (HDTM) 121 operates as a virtual expert for providing insight on anomalities.

The fuel system 160 may be configured to select from at least one of the following energy sources: diesel, liquified natural gas (LNG), liquified petroleum gas (LPG), methanol, low sulphur heavy fuel oil (HFO), marine gas oil (MGO), and hydrogen, for example.

Propulsion system 150 may utilize power source to be selected from at least one of the following: combustion-engine based power source; hybrid power source; and full electric power source.

The hydrodynamic thrust model (HDTM) 121 solution will allow different levels of automation within vessels. In first operation mode, hydrodynamic thrust model (HDTM) 121 may be configured to provide an anomaly detection plan, which the engineers can use for scheduling their activities to control thruster units. In second operation mode, hydrodynamic thrust model (HDTM) 121 may be configured to provide an embedded solution, wherein the sub-systems can notify the operator based on the anomaly detection plan, when to perform certain tasks or be switched on or set to standby in view of thruster units. This notification may be repeated on the main display in the engine control room or remote-control station. In third operation mode, hydrodynamic thrust model (HDTM) 121 may be configured to provide a solution to be fully automated and automatically executing the anomaly detection plan of the hydrodynamic thrust model (HDTM) 121 with merely notification provided to the operator or remote-control station when performing different automated tasks.

Furthermore, characteristic information representing at least one operating characteristic of the marine vessel 105 may be received as data 122. The dynamic hydrodynamic thrust model (HDTM) 121 may use any available internal or external data such as weather forecasts, route plan information, and the vessel related data including the characteristic information.

In an embodiment, the hydrodynamic thrust model (HDTM) 121 may be configured to perform a computer-implemented method for optimizing marine vessel thrust allocation for a plurality of thruster units, the method comprising: receiving marine vessel characteristics and thruster unit location information; determining performance profile in view of different azimuth degrees for each thruster unit based on the marine vessel characteristics and thruster unit location information, wherein the performance profile comprises thruster restriction zone information; receiving environmental information; generating a hydrodynamic thrust model by combining performance profiles of active thruster units and the environmental information; and determining thrust vector information for each active thruster unit based on the hydrodynamic thrust model and optionally with a vessel steering angle.

In an embodiment, a remote apparatus 123 may be provided. The remote apparatus 123 may comprise, for example, another marine vessel with corresponding elements as the vessel 105 and capable of transceiving data with each other. The remote apparatus 123 may also comprise a remote server apparatus for transceiving data or a remote control apparatus for the controlling the vessel 105 remotely, for example.

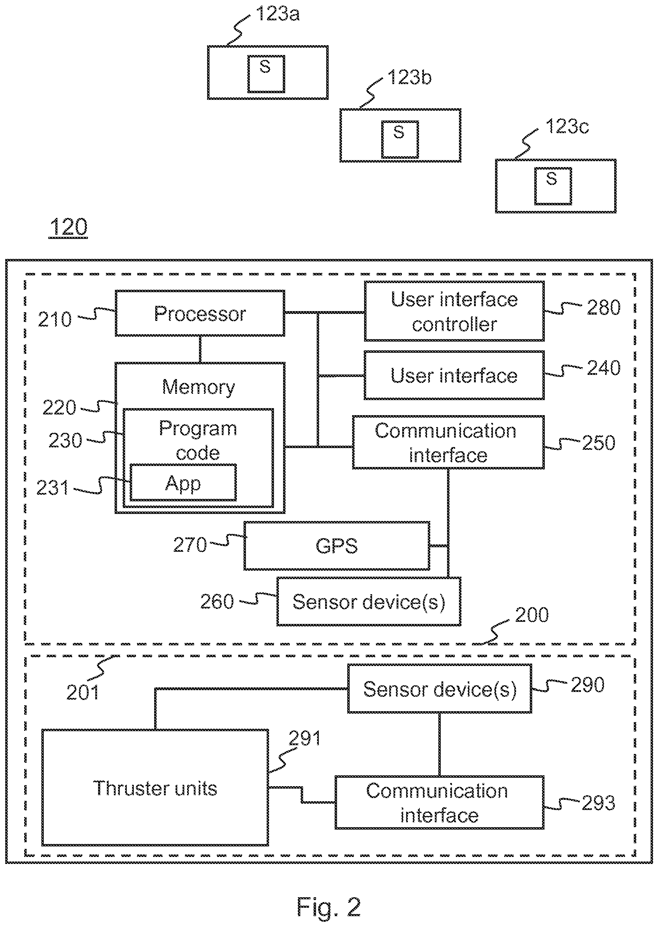

Fig. 2 presents an example block diagram of a control apparatus 120 (within a marine vessel, for example) in which various embodiments of the invention may be applied. The control apparatus 120 may comprise a user equipment (UE), user device or apparatus, such as a vessel computer system, in addition to the engine.

The general structure of the apparatus 120 comprises a control part 200 and a thruster part 201. Thruster part 201 may be integrated to the control part 200 or operate as separate unit, as such.

The general structure of the control part 200 may comprise a user interface 240, a communication interface 250, a satellite positioning device (GPS) 270, capturing/sensor device(s) 260 for capturing current activity data and/or current environmental data relating to the vessel, a processor 210, and a memory 220 coupled to the processor 210. The control part 200 further comprises software 230 stored in the memory 220 and operable to be loaded into and executed in the processor 210. The software 230 may comprise one or more software modules and can be in the form of a computer program product. The control part 200 may further comprise a user interface controller 280.

The processor 210 may be, e.g., a central processing unit (CPU), a microprocessor, a digital signal processor (DSP), a graphics processing unit, or the like. Fig. 2 shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary thrust optimizing application (client application) 231 comprising the hydrodynamic thrust model (HDTM) 121 (or data collection point in case the HDTM is arranged remotely at server apparatus) is stored at the memory 220. Thruster unit related data, sensor data and environmental data may also be stored to the memory 220. The program code 230 may comprise the hydrodynamic thrust model (HDTM) 121 and the proprietary application 231 may comprise a client application for the HDTM, for example.

The user interface controller 280 may comprise circuitry for receiving input from a user of the apparatus 120, e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The satellite positioning device 270 is configured to provide location information or time information, for example. Such information may comprise, for example, position coordinates, speed, direction of movement, GPS time, and altitude information.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution), or 5G radio module. The wired interface may comprise such as universal serial bus (USB) or National Marine Electronics Association (NMEA) 0183/2000 standard for example. The communication interface module 250 may be integrated into the apparatus 120, or into an adapter, card or the like that may be inserted into a suitable slot or port of the apparatus 120. The communication interface module 250 may support one radio interface technology or a plurality of technologies. The apparatus 120 may comprise a plurality of communication interface modules 250.

A skilled person appreciates that in addition to the elements shown in Fig. 2, the apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 120 may comprise a disposable or rechargeable battery (not shown) for powering when external power if external power supply is not available.

In an embodiment, the apparatus 120 comprises speech recognition means. Using these means, a pre-defined phrase may be recognized from the speech and translated into control information for the apparatus 120, for example.

The satellite positioning device 270 and the sensor device(s) 260 may be configured to be comprised by the apparatus 120 or connected as separate devices to the apparatus 120. In case the satellite positioning device 270 and the capturing device 260 are comprised in the apparatus 120 they may be connected to the apparatus 120 using an internal bus of the apparatus 120. In case the satellite positioning device 270 and the sensor device 260 are external devices connected to the apparatus 120 they may be connected to the apparatus 120 using communication interface 250 of the apparatus 120 or using the internal bus.

The general structure of the thruster part 201 may comprise a plurality of thruster units 291, thruster unit related sensor device(s) 290 and a communication interface 293. The sensor device(s) 290 may be not necessarily connected to the internal bus and to the main processor 210 and memory 220. Such sensor device(s) 290 may be connected to the thruster units 291 and the communication interface 293 of the thruster part 201. Furthermore, sensor data items with sensor data provided by the sensor device(s) 290 may be transmitted over the communication interface 293. Alternatively, sensor data items with sensor data provided by the sensor device(s) 290 may be provided for and transmitted by the communication interface 250.

In an embodiment, second sensor device(s) 260 may be configured to be integrated to a marine vessel's information system 200, and the first sensor device(s) 290 may be configured not to be integrated to the marine vessel's information system 200 but to the thruster units 291.

In an embodiment, the first sensor device(s) 290 are configured to be integrated to the thruster units 291. No matter a single sensor 290 is shown, the sensor 290 may comprise a plurality of sensors 290. The sensor devices 290 may be configured to, for example, measure thruster unit performance or operational data.

In an embodiment, a communication interface of the sensor device 290 itself or the communication interface 293 of the thruster part 201 comprises an automatic identification system (AIS) receiver for receiving a wireless transmission comprising automatic identification system data, e.g. from the marine vessel. The AIS receiver may include an antenna configured to receive the automatic identification system data or the sensor device 290 may include an antenna configured to receive the automatic identification system data. In another example, AIS receiver is configured to receive the automatic identification system data from an antenna external to the sensor device 290.

In an embodiment, the thruster units 291 and at least one sensor device 290 are configured to generate sensor data items based on the received automatic identification system data and sensor data. The sensor data item may thus comprise sensor data generated by the sensor device 290 and an identifier information. The identifier information may comprise at least one of the following: sensor-ID (S-ID); engine-ID (E-ID), and vessel-ID (V-ID) that comprises at least part of the received automatic identification system data.

The sensor data item may also comprise information identifying the marine vessel (for example, International Maritime Organization (IMO) ship identification number or Maritime Mobile Service Identity (MMSI)). This identifying information may be taken from the automatic identification system (AIS) signal or it may be stored within the apparatus 120 when installed.

The sensor data relating to the thruster units 291 performance and operation measured by the at least one sensor device 260, 290 or GPS 270 may comprise measured data values as they were measured and/or data after processing at least some of the measured data values first.

In an embodiment, universal clock information of the control part 200 is determined based on a vessel receiver device, comprising at least one of the Global Positioning System (GPS) receiver 270 and a communication interface 250 of the marine vessel. The universal clock information may comprise at least one of the following: a Global Positioning System (GPS) time and a Coordinated Universal Time (UTC).

In an embodiment, it is provided a method for determining the speed through water of the marine vessel for optimisation of vessel operation, using a sensor system with a plurality of sensors comprising at least one first sensor 290 of a first type and at least one second sensor 260, 270 of a second type.

The method comprises obtaining propeller revolutions per minute and at least one of torque at propeller, propulsion power, thrust, and engine fuel consumption using at least one first sensor 290, obtaining speed over ground of the vessel using at least one second sensor 260, 270.

Using the obtained data and hydrodynamic modeling it is possible to determine the speed through water of the vessel. The sensor data may also be used for optimizing the operation of the thruster units 291 as disclosed in different embodiments.

The sensor data may also be sent to the server apparatus as raw sensor data and the processing of the data and determination of vessel data may be carried out at the server. Additional first sensors 290 may be used, for example, to provide wind and sea state information that can also be used for determining vessel data, such as speed through water (STW) or optimal thruster unit operation. Traditionally, optimising operation of the vessel has been carried out using the STW measured by an STW log, which is inadequate due to calibration and noise issues. Hydrodynamic modeling data may be maintained at the control unit 200, e.g. in memory 220, and the hydrodynamic modeling data may be updated and downloaded from the server apparatus over the network when access is available, such as when docked in a harbor, for example.

In an embodiment, a hydrodynamic thrust model application (client application) 231 is maintained at the apparatus 120. The application 231 may comprise the HDTM model 121 (see Fig. 1), 231 or the HDTM model related data, such as thruster unit sensor data, vessel characteristics or environmental information, for example. Thruster unit or engine parameters relating to operation conditions may also be measured using at least one sensor 260, 290.

In an embodiment, at least one of the propeller revolutions per minute, torque at propeller, propulsion power, thrust, and engine fuel consumption is a measurement value resulting from a corresponding measurement of the sensors 290, and can be used as further input for the HDTM model.

For at least one first sensor 290, instead of a direct measurement of for example the propeller revolutions, it is possible to obtain this measurement value or data from an indirect measurement based on vessel vibrations detected by the sensor 290 attached to the vessel hull or engine, for example.

No matter a plurality of elements is shown, all elements are not essential for all embodiments. Some elements are optional, such as GPS 270, sensor device 260, user interface 240 and user interface controller 280.

Embodiments of the invention relate to provide optimum Dynamic Positioning (DP) performance of a vessel or a rig. This requires that the hydrodynamic performance of thrusters, thruster-hull interaction losses and thruster-thruster interaction losses need to be taken into account over the 360-degree circumference of each propulsion unit (referred to as thruster unit).

The thruster performance may be regarded as a constant-value. Such solution, however, does not provide accurate DP-performance and results in either higher installed power or higher fuel consumption or worse operability of the systems.

Typically, the hydrodynamic part of the overall DP system is taken into account on a conservative way with constant performance values, which have been reduced based on various generic impact factors. The benefits from a 8-degree tilted thrusters are not fully taken into account in these known methods, nor are current or location of thruster in relation to the surrounding vessel geometry playing any role.

To get the optimum Dynamic Positioning (DP) performance of a vessel or a rig the hydrodynamic performance of thrusters, thruster-hull interaction losses and thruster-thruster interaction losses need to be taken into account. A concept behind the embodiments of the invention is to (i) determine the actual performance of each single thruster unit over the 360-degree azimuth circumference with respect to interaction losses and (ii) determine the optimum combination of thruster propeller RPM and thruster steering angle to get the optimum overall thrust generation for DP-operation.

In conventional approaches the thruster performance is regarded as a constant-value, whereas in the proposal the net thrust (unit thrust - thruster-interaction losses) as function of the thruster azimuth angle and vessel geometry are taken into account based on Computational Fluid Dynamics (CFD) simulations.

According to the embodiments of the invention, aim is to implement actual net-thruster performance, depending on the azimuth/steering angle and interaction with the vessel hull. This includes the thruster-hull interaction losses and the thruster-thruster-interaction losses (the latter often implemented by forbidden-zones). In this approach there will be no limitations on the number of forbidden zones, nor on the angular extension of the different zones. Installation specific thruster performance may be calculated with CFD simulations and provided as input data for each individual propulsion/thruster unit as function of the azimuth angle, for example.

In an embodiment, a control algorithm is configured to determine optimum thruster steering angle deviations from target thrust direction, whilst ensuring zero side-force and zero-yaw moment on the vessel or the rig. This means that for a drill-rig with 8 units there are 16 degrees of freedom (azimuth angle and thrust-force based on propeller RPM). The algorithm is configured to determine either the maximum thrust in the demanded direction (to counter act the environmental force acting on the vessel) or it determined the most fuel-effective thrust in demanded direction, where the required power is optimized given a certain thrust demand.

In an embodiment, the method may further combine detailed hydrodynamic performance input data with the hydrodynamic model implemented as algorithm or neural network to converge to a stable thrust allocation logic (TAL).

During the evaluation process of a vessel's Dynamic Positioning (DP) capability, the actual propulsion performance of the propulsion units have typically been implemented based on a simplified constant Thrust/Power ratio approach, showing a fair prediction of the resulting vessel DP-capability. From a propulsion point of view there are aspects in such methodology that have room for improvement, which should lead to a more accurate description of the vessel's actual DP-performance. A major step which has to be made is the transition from a constant-performance factor of a thruster, to an actual 360°-circumferential performance description of each thruster-unit. This performance depends on the design of the thruster unit and the interaction with its surrounding, being the vessel geometry and the other thruster units. Interaction with the vessel geometry is expressed in the hull-thrust-deduction factor and interference with other thrusters is managed by the so-called forbidden zones. Full scale CFD simulations can be used to determine the various performance factors, and provide more detailed performance characteristics of azimuth thrusters, transverse tunnel thrusters or main propulsion propellers resulting in a performance polar plot for each separate unit.

According to embodiments of the invention, next step in the process of upgrading the DP-capability methodology is to implement the unit specific 360°-circumferential performance into the Thrust Allocation Logic (TAL). Existing allocation methods are typically based on Quadratic Programming (QP) approaches.

According to embodiments of the invention, implementation of any arbitrary performance polar plot into the QP-methodology is not straight forward however. According to embodiments, a system simulation approach may be used, which can read any polar performance data set and remove the limitation with regards to the input performance data. The problem of defining the individual thrust vectors (magnitude and angle) of all units remains however. For vessels with multiple thruster units, the target is to get the maximum thrust in the desired direction, whilst minimizing the resultant yaw-moment and side force (perpendicular to the target heading).

In an embodiment, an iterative method may be programmed in the system simulation methodology, which takes care of elimination of the yaw-moment. Once the individual thrust vectors have been defined, the total force can be checked as well as the remaining yaw-moment and side-forces resulting in a thrust-availability polar plot. In case a vessel experiences significant yaw-moments from environmental loads, a compensating yaw moment should be targeted at. With such a plot, the performance of different thruster configurations and/or power ratings can be compared and explored.

In order to transfer the thrust-availability to a DP-capability plot, the impact of the environmental forces on the vessel from wind, waves and current need to be included. Data of reference may be used to determine the wind-force coefficients of the vessel in question, with different reference data for different vessel types may be utilized. Corresponding data sets may be defined to be available for current and wave forces.

The satellite positioning device 270 and the capturing device 260, 290 may be configured to be comprised by the control apparatus 120 or connected as separate devices to the apparatus 120. In case the satellite positioning device 270 and the capturing device 260, 290 are comprised in the apparatus 120 they may be connected to the apparatus 120 using an internal bus of the apparatus 120. In case the satellite positioning device 270 and the capturing device 260, 290 are external devices connected to the apparatus 120 they may be connected to the apparatus 120 using communication interface 250 of the apparatus 120 or using a connection to the internal bus.

In an embodiment, the capturing device 260, 290 may comprise a thruster unit sensor configured to measure at least one of the following: RPM, torque, load, tilt angle or azimuth angle of the thruster unit. The device 260, 290 may also comprise a global navigation satellite system (GNSS) position sensor, position reference sensor for pulsed laser device, and a docking sensor, for example. The control apparatus 120 may be configured to select between different sensors depending on the currently active mode. The capturing device 260, 290 may comprise at least one sensor, wherein the at least one sensor is configured to provide thruster unit data, position related data or environment related data. The at least one sensor may comprise at least one of the following: a thruster unit shaft sensor, a position reference sensor; a global navigation satellite system (GNSS) position sensor; a docking sensor for providing relative positioning information relative to a berth; a gyro compass sensor for providing heading information; a motion reference unit (MRU) sensor for providing pitch and information; and a wind sensor for providing wind speed and direction information.

In an embodiment, the capturing device 260, 290 may comprise at least one device configured to provide at least one of the following environmental information: wind direction information; wind velocity information; air density information; current direction information; current velocity information; water density information; wave direction information; wave spectrum information; gravity information; water salinity; water depth information; and wave amplitude information.

In an embodiment, the capturing device 260, 290 may comprise at least one device configured to provide at least one of the following thruster unit related information:
position of the thruster unit in at least two horizontal dimensions relative to a hull of the marine vessel;
thruster tilt angle information; and
thruster vertical position relative to the hull of the marine vessel.

In an embodiment, capturing device 260, 290 may also be configured to receive marine vessel characteristics comprises at least one of the following: transverse area information of a marine vessel superstructure; lateral area information of the marine vessel superstructure; length information of the marine vessel; midship beam information of the marine vessel; perpendicular length information of the marine vessel; and midship draught information of the marine vessel.

However, typically the marine vessel characteristics are maintained within the memory 220 of the control apparatus 120 without receiving via any capturing device 260, 290.

In an embodiment, the control apparatus 120 may include a suite of sensors 260, 290 that will provide position and environment data to support the controller operation. GNSS sensor comprises as absolute position sensor based on satellite navigation (GLONASS, GPS, GALILEO) that provides the current measured position of the vessel on the earth's surface. The GNSS system that may be used, for example, is Fugro OceanStar^{™} 3 that offers decimeter accuracy for position measurements with a combination of three GNSS receivers. Data is also available from individual receivers as a backup position measurement method, though with less available accuracy. Gyro Compass comprises an absolute heading sensor that provides the measured offset of the vessel from true north. The motion reference unit (MRU) sensor comprises a pitch and roll sensor that provides measured offset from the vertical for pitch and roll. The GNSS system may include its own captive motion reference unit (MRU). This may be required to increase accuracy of the GNSS since the GNSS antenna can swing through a large arc during pitch and roll. Mathematical calculation can be used to normalize the measurement to the vertical based on the pitch and roll measurement.

The capturing device 260, 290 may also comprise several capturing devices 260, 290, combinations of any above-mentioned devices, and the like. The environmental temperature may comprise air temperature, water temperature or ground surface temperature, for example.

In an embodiment, a wind sensor 260, 290 is configured to determine or measure wind angle and wind speed. The wind sensor may comprise any element of combination of elements operable to sense wind-related information for use by the control apparatus 120. For example, the wind sensor 260, 290 may be operable to sense apparent wind speed, apparent wind angle, true wind speed, true wind angle, wind velocity made good (VMG), combinations thereof, and the like.

In an embodiment, a video camera 260, 290 is configured to provide video signal. Based on the video signal the control apparatus 120 may determine at least part of the environmental data or object information around the vessel. For example, flute height may be determined based on the video signal from the video camera. The determination may be done by video image processing, pattern recognition, measuring a rocking movement or relative movement of a horizon, for example.

The capturing device 260, 290 may comprise communication interface module implementing at least part of data transmission. The communication interface module may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as universal serial bus (USB) or National Marine Electronics Association (NMEA) 0183/2000 standard for example. The communication interface module may be integrated into the capturing device 260, 290, or into an adapter, card or the like that may be inserted into a suitable slot or port of the capturing device 260, 290. The communication interface module may support one radio interface technology or a plurality of technologies. The capturing device 260, 290 may comprise a plurality of communication interface modules.

In an embodiment, at least one remote apparatus 123a-c may be arranged to be able to transceive data with the control apparatus 120. The remote apparatus 123a-c may have corresponding structure as the control apparatus 120. The remote apparatus 123a-c may comprise e.g. a server apparatus with similar structure as the control apparatus 120 but without the thruster unit part 201 and even without GPS 270 and sensor devices 260, for example. The remote apparatus 123a-c may also comprise e.g. a remote control apparatus with similar structure as the control apparatus 120 but without the thruster unit part 201 and even without GPS 270 and sensor devices 260, for example. The remote apparatus 123a-c may also comprise e.g. a reference apparatus with similar structure as the control apparatus 120 and capable to provide reference data to be used within the control apparatus 120, for example.

In an embodiment, the control apparatus 120 (and the hydrodynamic model comprised by the memory 230) may receive reference data from a remote apparatus 123a-c comprising a plurality of reference sensors (S) operationally arranged to a reference marine vessel to provide reference sensor data.

According to embodiments, a new approach for determination of DP-capability is disclosed in which the method is based on the polar performance data of each individual thruster. In the following sections, a number of offshore vessels are discussed, which vary from a drill-rig with a homogeneous set of azimuth thrusters to a supply vessel with a large variation in propulsion units onboard. With the new methodology, a DP capability evaluation can be made for all vessels, since the propulsion unit specific polar thrust performance data is read as input data.

Marine vessels discussed in following sections are commonly equipped with azimuth thrusters, some of which can be executed by a retraction mechanism in case the units are not allowed to protrude below the vessel base line. It is acknowledged that this is by far not a complete list of vessels which are currently equipped with DP-systems but will serve as exemplary environment for embodiments of the invention.

### Example: Semi-submersible drill-rig (multiple azimuth thruster units)

Semi-submersible drill-rigs are generally known for flat, 2 pontoons underside. In the era before the 8°-tilted thrusters, quite significant thruster-hull interaction phenomena with such an underside were presented with such typical thruster-hull interaction given by various researchers however, with the introduction of tilted thrusters, exceeding a 7 degree tilt angle, the flow is deflected significantly downward and eliminating hull-thruster interaction. This positive impact of thruster-tilt angle on DP-performance has been acknowledged.

When looking at the lay-out of the thruster units on a semi-submersible rig, two variants can be distinguished, which are a circular and a cross layout.

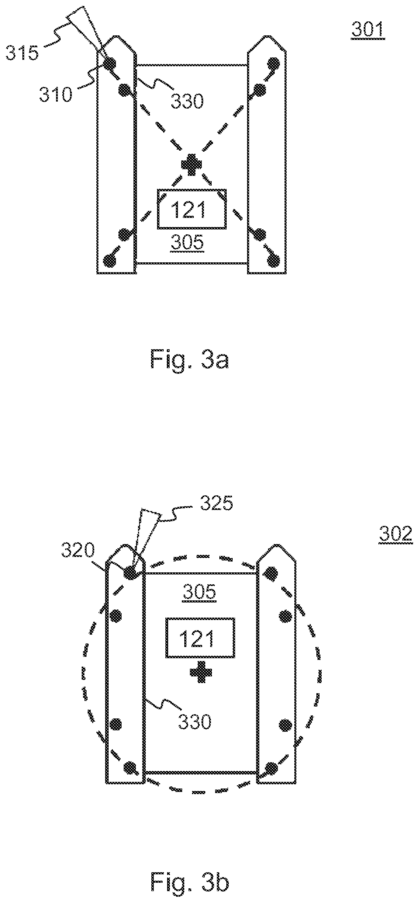

Fig. 3a shows a cross layout configuration 301 for thruster units implemented in a drill-rig 305 according to an example embodiment of the invention.

Fig. 3b shows a circular layout configuration 302 for thruster units implemented in a drill-rig 305 according to an example embodiment of the invention.

In the circular layout of Fig. 3b, the forward-most units 320 are placed on the inner side of the pontoons 330, whereas in the cross layout of Fig. 3a, the most forward units 310 are placed on the outer side of the pontoon 330. The choice for the thruster arrangement will have an impact on the sectors of the forbidden zones 315, 325. For the drill rig configurations 310-302 shown, the main forbidden zone is dictated by the thruster unit which is closest. Two forbidden zones 315, 325 are indicated for the most-forward port thruster 310, 320 respectively, showing the difference in orientation.

In an embodiment, a hydrodynamic thrust model (HDTM) 121 determines, for each thruster unit 310, 320, thrust vector information including optimum thruster steering angle deviations from a target direction, whilst ensuring zero side-force and zero-yaw moment on the rig 305. This means that for a drill-rig 305 with 8 thruster units 310, 320 there are 16 degrees of freedom (azimuth angle and thrust-force based on propeller RPM). An algorithm of the hydrodynamic thrust model (HDTM) 121 is configured to determine maximum thrust in the demanded direction (to counter act the maximum allowable environmental force acting on the vessel).

In an embodiment, a computer-implemented method for optimizing marine vessel thrust allocation for a plurality of thruster units 310, 320 is provided, wherein the method comprises receiving marine vessel characteristics and thruster unit location information, determining performance profile in view of different azimuth degrees for each thruster unit based on the marine vessel characteristics and thruster unit location information, wherein the performance profile comprises thruster restriction zone information, and receiving environmental information. The method further comprises generating a hydrodynamic thrust model 121 by combining performance profiles of active thruster units 310, 320 and the environmental information, and determining thrust vector information for each active thruster unit 310, 320 based on the hydrodynamic thrust model.

The method combines hydrodynamic thrust model and desired vessel steering angle to converge to a stable thrust allocation logic.

In an embodiment, following steps may be defined.

First, needed input data is received, such as marine vessel characteristics (e.g. vessel layout) and thruster unit location information.

Second, based on the vessel characteristics and the thruster unit location information, a performance profile in view of different azimuth degrees for each thruster unit is determined. The performance profile is determined for 360-degree azimuth angle including possible forbidden zones.

Third, a hydrodynamic thrust model 121 is generated by combining performance profiles of active thruster units and the environmental information. The hydrodynamic thrust model 121 is configured to define, based on the forbidden zone data, allowed azimuth angles for given steering input angle (methodology to determine allowed angle in case of adjustment of steering angle with either positive of negative steering) and determines thrust vector information for each thruster unit.

The hydrodynamic thrust model 121 is configured to determine total generated thrust, based on the detailed hydrodynamic thruster performance input (unit thrust - thruster-interaction losses) as function of the thruster azimuth angle. Generated side-force (perpendicular to thrust-demand direction) and vessel yaw-moment are determined as well.

Fourth, for each thruster unit the impact of adjustment of steering angle (positive or negative) on the side-force and on the yaw-moment is determined by the model 121.

Fifth, for each thruster unit the impact of reduction of the thruster-load (thrust-magnitude) on the side-force and on the yaw-moment is determined by the model 121.

Sixth, based on the results of fourth and fifth step, the most effective adjustment is selected and the process is repeated until the side-force and yaw-moment have been eliminated. For a maximum thrust option the elimination of side force and yaw-moment is primarily achieved with thruster-steering angle adjustments.

Seventh, output from the hydrodynamic thrust model 121 is optimized steering angles and power ratings (thrust vector information) for 360-degree circumference for each individual thruster unit (azimuth thruster, tunnel thruster or propeller) and the thruster units 310, 320 are controlled according to the determined thruster vector information.

The resulting method is more effective, accurate and reliable, and furthermore, number of forbidden zones is unlimited and each propulsion unit gets a dedicated setting based on the combined performance of all units for a vessel specific case.

One variation is achieved by using a weight-function that is applied to steering angle adjustments. For the maximum efficiency the elimination of side force and yaw-moment is primarily achieved with thruster-load reductions.

### Example: Supply vessels with multiple propulsion units (azimuth thrusters, tunnel thrusters, propellers)

The hydrodynamic thrust model 121 determines optimum thruster steering angle deviations from the target direction, whilst ensuring zero side-force and zero-yaw moment on the rig 305. This means that for a supply vessel with main propulsion (either propellers with rudders or azimuth thrusters), tunnel thrusters and retractable thrusters there are multiple degrees of freedom (thrust-force based on propeller RPM, propeller pitch and azimuth angle). The hydrodynamic thrust model 121 determines maximum thrust in the demanded direction (to counter act the environmental force acting on the vessel).

The method combines hydrodynamic thrust model and desired vessel steering angle to converge to a stable thrust allocation logic.

In an embodiment, following steps may be defined.

First, needed input data is received, such as marine vessel characteristics (e.g. vessel layout), thruster unit types (propellers, azimuth thrusters, tunnel thrusters), and thruster unit location information.

Second, based on the vessel characteristics and the thruster unit location information, a performance profile in view of different azimuth degrees for each thruster unit is determined. The performance profile is determined for 360-degree azimuth angle including possible forbidden zones. Performance of tunnel thrusters will be limited to port and starboard operation, based on forbidden zones which cover the remainder of the 360-degree circumference.

Third, a hydrodynamic thrust model 121 is generated by combining performance profiles of active thruster units and the environmental information. The hydrodynamic thrust model 121 is configured to define, based on the forbidden zone data, allowed azimuth angles for given steering input angle (methodology to determine allowed angle in case of adjustment of steering angle with either positive of negative steering) and determines thrust vector information for each thruster unit.

The hydrodynamic thrust model 121 is configured to determine total generated thrust, based on the detailed hydrodynamic thruster performance input (unit thrust - thruster-interaction losses) as function of the thruster azimuth angle. Generated side-force (perpendicular to thrust-demand direction) and vessel yaw-moment are determined as well.

Fourth, for each thruster unit the impact of adjustment of steering angle (positive or negative) on the side-force and on the yaw-moment is determined by the model 121.

Fifth, for each thruster unit the impact of reduction of the thruster-load (thrust-magnitude) on the side-force and on the yaw-moment is determined by the model 121.

Sixth, based on the results of fourth and fifth step, the most effective adjustment is selected and the process is repeated until the side-force and yaw-moment have been eliminated. For a maximum thrust option the elimination of side force and yaw-moment is primarily achieved with thruster-steering angle adjustments.

Seventh, output from the hydrodynamic thrust model 121 is optimized steering angles and power ratings (thrust vector information) for 360-degree circumference for each individual thruster unit (azimuth thruster, tunnel thruster or propeller) and the thruster units 310, 320 are controlled according to the determined thruster vector information.

The resulting method is more effective, accurate and reliable, and furthermore, number of forbidden zones is unlimited and each propulsion unit gets a dedicated setting based on the combined performance of all units for a vessel specific case.

By using the hydrodynamic thruster model 121 as disclosed, it is possible to provide, with optimum (realistic) thrust allocation algorithm, more accurate DP-performance, resulting in either lower installed power or lower fuel consumption or better operability of the systems.

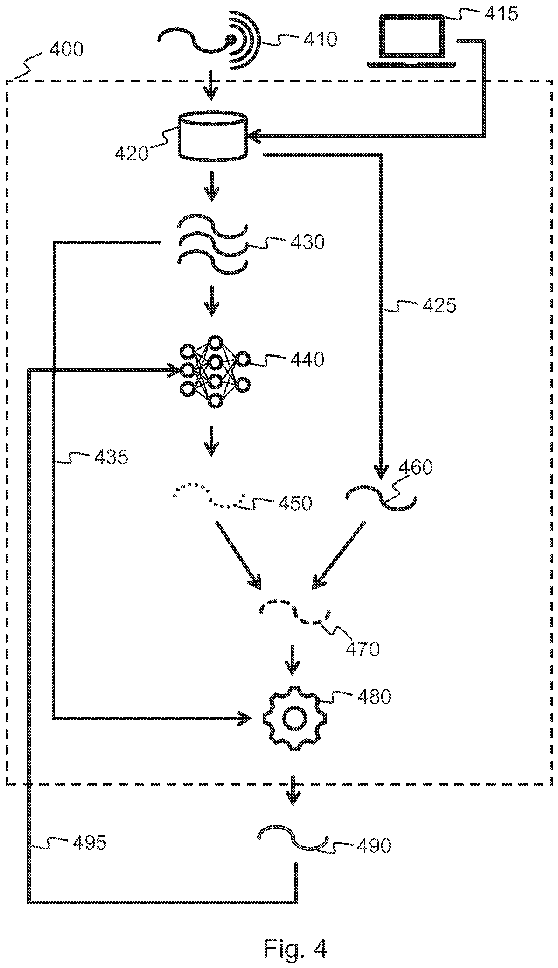

Fig. 4 shows a schematic picture of a computer implemented method and system for optimizing marine vessel thrust allocation for a plurality of thruster units, comprising a hydrodynamic thrust model (HDTM) 400 according to an example embodiment. The hydrodynamic thrust model (HDTM) 400 may be configured to be maintained at a remote server apparatus, at a remote control apparatus, at a marine vessel control apparatus or any combination of those. For example, data collection 410 may be arranged from one apparatus (e.g. marine vessel control apparatus), an insight input 415 from a second apparatus (e.g. remote control apparatus) and the actual data processing and neural network involvement at a third apparatus (e.g. remote server apparatus), for example.

First, data is collected from various sensors 410 operationally arranged to the marine vessel, such as thruster units, and from marine vessel data system 415 or from other data sources within the data system, for example. For example, a plurality of sensors may be operationally arranged to thruster unit system of the marine vessel. Marine vessel data system 415 may provide input data, such as environmental information, vessel steering angle, marine vessel characteristics and thruster unit location information.

Received data from sensors 410 is maintained as sensor data within a data storage system 420. The data storage system 420 may be arranged to a remote server apparatus, such as cloud server, but may also be stored at marine vessel data storage. The maintained sensor data and marine vessel data of the data storage system 420 is provided as source data for further processing.

Second, historical data 430 is determined based on the source data of the data storage system 420. The historical data 430 comprises data from a plurality of sensors and marine vessel data system. The historical data 430 is then provided as input to a neural network 440.

Third, the neural network 440 generates predicted data 450 for a subset of the plurality of sensors as output by the neural network 440. The subset comprises at least one sensor of the plurality of sensors. Historical data may comprise data from a plurality of sensors. Parallel to the generation of predicted data 450, actual data 460 is determined from the sensor data of the data storage system 420 based on association to the subset of the plurality of sensors.

In an embodiment, the subset of the plurality of sensors may comprise several sensors but usually not the total number of sensors wherefrom sensor data is received. For example, sensor data is received from N sensors. Of these N sensors, the hydrodynamic thrust model (HDTM) 400 is configured to reconstruct a total of n sensors, in which n is close to but (almost) never equal to N, resulting as n<N.

In an embodiment, the hydrodynamic thrust model (HDTM) 400 is configured to generate reconstruction data 450 for a period of time, for sensor S1, based on all other sensor data 430 in that same period, S2 ... Sn using the neural network 440. This is done for each sensor S1 ... Sn. If reconstruction data 450 is made for sensor Sx, that reconstruction data 450 is compared to the actual data 460 of Sx in the same period of time. Similar comparison can then be done for each sensor S1 ... Sn.

Fourth, the predicted data 450 is combined with the actual data 460 for the subset of the plurality of sensors to provide error data 470. The actual data 460 is determined from the sensor data of the data storage 420 system based on association to the subset of the plurality of sensors.

Fifth, the error data 470 is processed by error data processing 480 of the hydrodynamic thrust model (HDTM) 400 by combining the error data 470 with a selected subset 435 of the historical data 430.

Sixth, anomalous data 490 is detected based on the error data processing 480. The anomaly detection model 400 and related processing 430, 440, 480, and combining with the history data 430 of sensor data, may for example result to a peak in certain actual sensor data that is not as predicted by the model as predicted data. Such deviation may indicate an anomaly even though the peak may be not high compared to the expected sensor behavior. Alternatively, values in certain sensor may be much higher than usual, but the model has predicted such behavior based on the other sensor signals. Therefore, such data may not be anomalous.

In an embodiment, the neural network 440 is used for determination of an anomaly 490 based on the error data 470.

In an embodiment, the neural network 440 is configured to simulate the predicted data 450 correlating with the history data 430, and the neural network 440 is adjusted to the sensor data 420 by means of a training function. The training function may comprise at least one of the following: Gradient descent function; Newton's method function; Conjugate gradient function; Quasi-Newton method function; and Levenberg-Marquardt function.

Detected anomality may trigger certain tasks within the marine vessel data system, either automatically, or in response to some confirmation by operating user, for example.

In an embodiment, the hydrodynamic thrust model 400 is updated based on the error data 470 or the anomaly data 490.

In an embodiment, the neural network 440 of the hydrodynamic thrust model 400 is updated based on the error data 470 or the anomalous data 490.

In an embodiment, a continuous evaluation application as part of the marine vessel data system 415 for evaluating the neural network based anomality results may be provided. The evaluation application may receive user input by experts via online application, for example. The results 490 of the neural network process 410-480 may be labeled in the form of an 'indication of unusual data'. A tool of the application within the system 495 used may be called an Anomaly Timeline, and it may show heat bars per sensor, per asset, and/or per installation. The redder a heat bar is, the more unusual the data behavior is at that point in time.

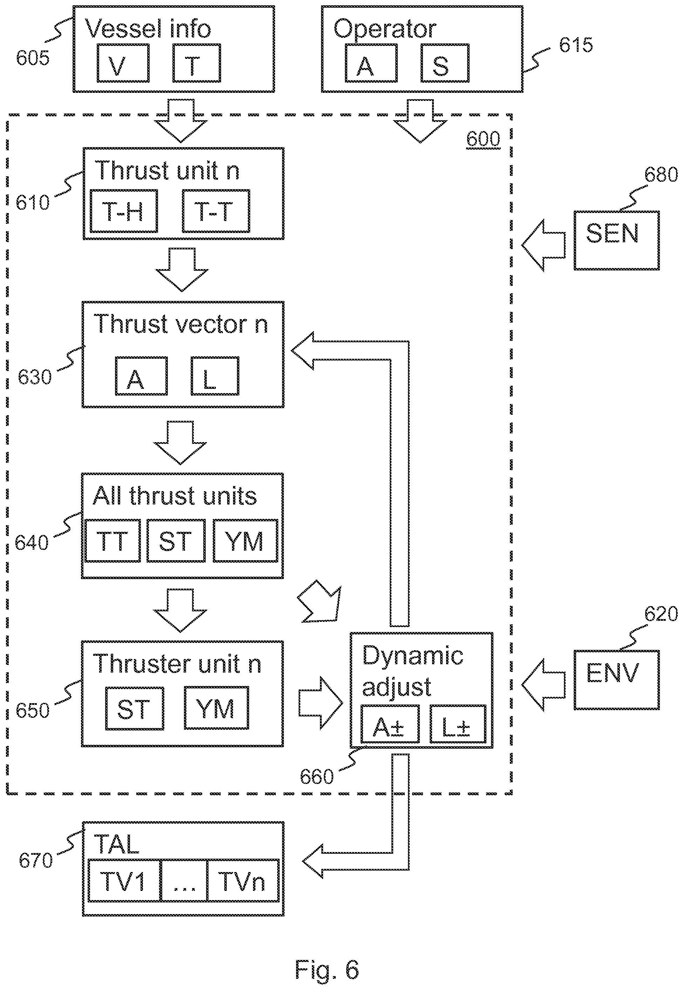

In an embodiment, anomaly data 490 may be used for trending and/or fouling of assets, such as thruster units, engine or hull of the marine vessel. The hydrodynamic thrust model (HDTM) 400 may indicate some anomalities within the anomaly data 490 based on certain input data, such as environmental data, vessel information, sensor data and operator information (see e.g. Fig. 6 for elements 600, 605, 615, 620, 680), for example, not all inputs are mandatory. Such anomality data 490 may thus be identified by the hydrodynamic thrust model (HDTM) 400 early on and indicate some trending or fouling of operation or performance. Based on the anomaly data 490, trending data and/or fouling data may be determined. Such trending or fouling data may relate to nonoptimal operation of a thruster unit, an engine, or a vessel hull due to fouling, for example. Such information may be used to predictively plan service, such as hull or thruster unit cleaning, for example. The fouling data may be configured to automatically trigger predictive maintenance request for a service provider network. Trending data and/or history data of the hydrodynamic thrust model (HDTM) 400 may be included to the automatic request, for example. Fingerprint of the hydrodynamic thrust model (HDTM) 400 may be used as metadata for the request.

The thruster experts may use the Anomaly Timeline tool to find the 'needles in the haystack'. The experts may review all the periods of data indicated by the model 400 as unusual in step 490 and verify these. The expert users may confirm if it is really something that should be reported to the customer, for example. Similarly, they decide if the anomaly 490 is a 'false positive' no matter the model 400 marked some period as unusual while the expert thinks it is as expected.

Once the thruster expert is convinced that data is unexpected, he/she may create a case about it in communication channel. Here the data can be discussed with all stakeholders; experts, installation crew, etc. Together the data can be studied, and a solution can be found to tackle the problem and make the data return to expected behavior.

Once the problem is solved, the case can be closed. While doing this, the stakeholders can indicate what the end solution was that solved the problem, what the severity of the case was, and more case related information.

Both the first validation round (the Anomaly Timeline) as the second (communication channel) provide valuable feedback on the output 490 of the hydrodynamic thrust model 400. The model itself can be trained better if it knows what anomalies are considered relevant (with a high severity), and what output of the model is falsely positive. The output of the model can be processed more automatically if it can be taught to know what approach often solves unexpected data behavior.

In an embodiment, the neural network 440 is trained by means of signals from the individual sensors 410 and/or marine vessel data system 415 for determining internal neural network parameters.

The feedback information may be gathered by the evaluation application continuously. If the expert marks a period of data as irrelevant in the Anomaly Timeline, it may be configured to disappear at the view of all other experts, so nobody must check that period of data anymore. Then again, if a stakeholder of a case closes the cases and marks the case as highly severe, a separate model may learn this so that future similar anomalies will be more prominently indicated in the Anomaly Timeline. This will lead to the engine expert validating the data earlier, thereby shortening the time between model output and case creation. This would benefit the stakeholders as this enables information to be available faster to them.

If a stakeholder of a case closes the case and indicates the solution that solved the unexpected behavior, the communication channel can, next time the behavior occurs, come up with an automatic proposed solution. This greatly improves the time to solve a case. This learning will be utilizing pattern recognition techniques on the related data of all cases created on all engines. This will enable knowledge from one single expert to become available to all experts.

In an embodiment, prior to engaging the hydrodynamic thruster model 121, 400, it is necessary to verify that all necessary thrusters are fully operational. Since thrusters may not have been in use for extended periods of time, a thruster ready indication may not be enough to guarantee the operation of the thruster. For this purpose, an automated thruster check function may be used that automatically issues a command and verifies that each thruster unit is following as expected. Successful thruster checks immediately prior to engaging the hydrodynamic thruster model 121, 400, can be included as a condition for system readiness.

In an embodiment, data storage 420 may also receive reference sensor data (corresponding to sensor data 410) from a remote apparatus (see apparatus 123 in Fig. 1-2) comprising a plurality of reference sensors (S) operationally arranged to a reference marine vessel to provide reference sensor data. The hydrodynamic thrust model (HDTM) 400 may be configured to determine reference historical data 430 based on the reference sensor data, and provide the reference historical data 430 as input to the neural network 440. Thus available reference data from another marine vessel may be used for the optimization of thruster units.

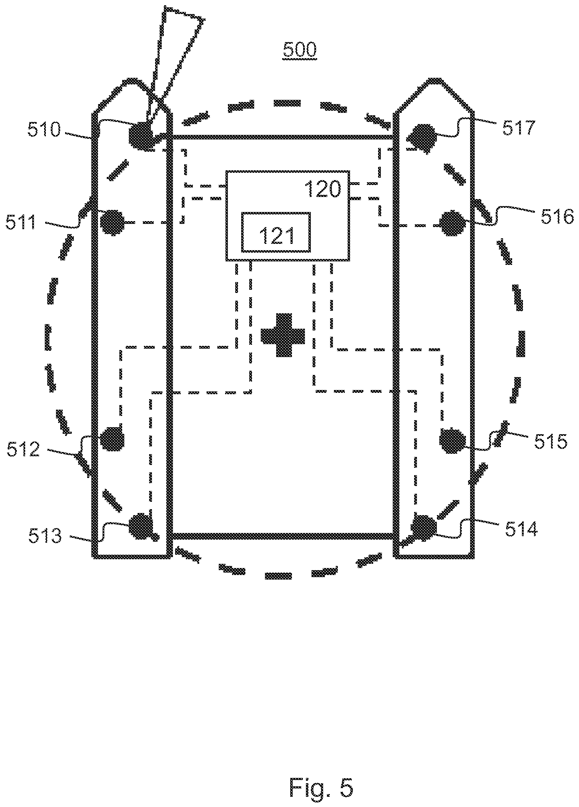

Fig. 5 presents an example block diagram of a control apparatus 120 and a hydrodynamic thrust model (HDTM) 121 arranged in a marine vessel 500, such as a drill-rig in which various embodiments of the invention may be applied. The control apparatus 120 is configured to operate a computer-implemented method for optimizing marine vessel thrust allocation for a plurality of thruster units 510-517, wherein the plurality of thruster units 510-517 are operationally connected to the control apparatus 120. For clarity reasons, only limited number of units are shown in Fig. 5 instead of all devices installed in a marine vessel 500.

As an example, each thruster unit 510-517 of the marine vessel 500 may comprise an 8°-tilted thruster unit 510-517.

In an embodiment, in order to evaluate full-scale performance prediction of an 8°-tilted thruster unit 510-517, a hydrodynamic thrust model (HDTM) 121 has been trained with real reference data. The hydrodynamic thrust model (HDTM) 121 is configured to model performance of 8 azimuth thruster units 510-517 in combination with the vessel 500 hydrodynamic resistance in transit mode, for example.

The actual operational data of all thruster units 510-517 has been measured onboard of the vessel 500 together with the vessel speed (speed through water or speed over ground). In a transient simulation, the thruster propeller RPM and thruster azimuth angle are read from the monitoring data and the full-scale thruster unit performance curve may be calculated with Computational Fluid Dynamics (CFD) simulation as previously mentioned. Based on initial vessel speed and propeller RPM, the unit thrust may be calculated. As long as the resultant force of all 8 units 510-517 exceeds the hull resistance, the vessel 500 will accelerate. The higher vessel speed will have impact on the actual propeller loading (both thrust and torque).

The data from the sea trials shows quite large variations in both thruster RPM and steering angle, resulting in a vessel speed and the shaft torque that do not reach a steady-state value, and the comparison between the measured and calculated ship speed shows that the overall agreement is good. The hydrodynamic thrust model (HDTM) 121 takes both the vessel inertia and the resistance into account. Test and training data indicates that when the thrusters are shutdown, the vessel takes a few minutes to decelerate due to its inertia. During the acceleration of the vessel, the majority of the thrust is used to overcome the inertia of the rig. The measured and calculated torque show good agreement as well, with similar results obtained for all 8 units. The torque signal shows a number of steps in the signal during acceleration that are directly related to the steps in propeller RPM. The impact of vessel speed increase can be observed by the small negative slope in the torque signal and due to higher inflow speed, the propeller loading reduces slightly, which results in a small reduction of torque.

From the results from the hydrodynamic thrust model (HDTM) 121 simulations it is concluded that the full scale thruster input performance data can be regarded as accurate. Similar results from CFD simulations may be used, when thruster performance data is used.

Hydrodynamic performance of the propulsion system 510-517 has been discussed. The generated thrust from the azimuth thrusters 510-517 balance the hull resistance of the vessel 500 in transit condition well. The hull resistance in both water and wind is aligned with the vessel surge direction in such condition. However, for the hydrodynamic thrust model (HDTM) 121 to determine and control the DP-capability of the vessel 500, the impact of environmental forces need to be taken in to account by the hydrodynamic thrust model (HDTM) 121 over complete 360° circumference. These environmental forces are split into the contributions from wind, waves and current in general. Once the environmental forces and moments are determined, the Thrust Allocation Logic (TAL) may be applied to the available thruster unit performance data to find a balance with the environmental forces. For the TAL different targets can be defined, depending on the life-cycle phase. Two example targets may be: "Maximum achievable dynamic positioning thrust, including failure cases", and "Economic part load operation (fuel saving modes)".

In order to get a good thrust allocation, all aspects of the net-thrust generation have to be taken into account. This means that the unit performance over its complete 360° circumference including the specific thrust deduction for each operating angle have to be considered. Apart from this, all possible forbidden zones have to be complied with when selecting thruster azimuth angles. Forbidden zones are mainly related to the drop in performance when the jet of one thruster interacts with another downstream unit.

Impact of environmental forces needs to be trained for the hydrodynamic thrust model (HDTM) 121. Significant contribution to the environmental forces and moments arises from the wind forces, acting on the vessel 500 superstructure. Relations between wind force and wave height, wave period and current may be defined to provide formulae for the calculation of various environmental forces. A comparison between wind forces and moments acting on both a drill-ship and a semi-submersible drill-rig can be calculated, based on those formulae providing frontal (Fx) and longitudinal (Fy) force curves in line with expectations. A reasonable resemblance is given in the longitudinal force, whereas the impact of the difference in frontal area can be seen in for the frontal force. From the two forces, the resultant force vector can be calculated and the direction of this total wind force can be compared to the angle of the wind. The difference between these two angles indicates clear difference for two vessels, for example at a wind-angle of 30°, the resultant wind force on the drill-rig retains an angle of about 30°, where the total force on the drill-ship already has an angle of about 60°.

A similar trend is seen when the yaw-moment (Mz) is evaluated. In this example, the maximum yaw-moment acting on the drill-ship is about 3 times the yaw-moment of the drill-rig. Balancing this vessel yaw-moment is a key-target of the hydrodynamic thrust model (HDTM) 121 controlling the TAL, along with maximization of the thrust-force in the target direction of the total combined environmental forces.

In an embodiment, when training the hydrodynamic thrust model (HDTM) 121 with real reference data, different input data may be used, such as thruster unit RPM, thruster unit angle, thruster unit torque, vessel heading and vessel speed.

Fig. 6 presents an example schematic diagram of operational phases and data items related to the hydrodynamic thrust model (HDTM), in which various embodiments of the invention may be applied.

A computer-implemented method for optimizing marine vessel thrust allocation for a plurality of thruster units is configured to use input data for processing. First, marine vessel information 605 is received that comprises e.g. vessel characteristics (V) and thruster unit location information (T).

A performance profile 610 is determined in view of different azimuth degrees, through 360 degrees, for each thruster unit is determined based on the marine vessel characteristics and thruster unit location information, wherein the performance profile comprises thruster restriction zone information, such as thruster-hull interaction losses (T-H) and thruster-thruster interaction zones (T-T). The performance profile may be generated by the hydrodynamic thrust model (HDTM) based on received inputs or the performance profile may be received as input as part of the vessel info 605, as such.

Next, environmental information (ENV) 620 is received.

In further step, a hydrodynamic thrust model (HDTM) 600 is generated by combining performance profiles 610 of active thruster units and the environmental information 620. Furthermore, sensor data 680 may be used as input for the hydrodynamic thrust model (HDTM) 600.

Next, thrust vector information 630 is determined for each active thruster unit (n units) based on the hydrodynamic thrust model 600. Vessel steering information 615 may be received and comprising steering angle (A) and desired speed (S), for example. Vessel steering angle (A) and/or vessel speed (S) may be used for determining thrust vector information 630 with the model 600. The thrust vector information 630 may comprise azimuth angle and thruster loading for the thruster unit n. Generally, the hydrodynamic thrust model (HDTM) 600 may receive steering information (A+S) and determine thrust vector information (TV1-TVn) based on the steering information and the hydrodynamic thrust model 600. At least one thrust unit may then be controlled based on the thrust vector information.

In further step, total thrust information 640 is determined. The total thrust information 640 may comprise total thrust (TT) in target direction, side thrust information (ST) and yaw-moment (YM).

Based on the total thrust information 640, thruster specific contribution 650 to elimination of side force and yaw-moment by angle adjustment and thrust loading may be determined.

In an embodiment, after the thruster specific contribution 650, an optimal dynamic adjustment 660 is determined using the hydrodynamic thrust model (HDTM) 600. The dynamic adjustment information 660 is then used to adjust thrust vector information 630 for at least one thruster unit n. The dynamic adjustment 660 may be determined recursively for selecting of most effective adjustment step until convergence of the side thrust and yaw-moment. The thrust vector information with the dynamic adjustment information 660 is then configured to control the thrust allocation logic (TAL) 670 for a plurality of thruster units with dynamically adjusted thrust vector information (TV1...TVn) for each thruster unit.

Optionally, total thrust information 640 may be used as input for the dynamic angle adjustment and thrust load determination 660.

The optimum thrust vector information (TV1-TVn) for each thrust unit may be determined by minimizing side force and yaw moment according the received sensor data 680.

In an embodiment, the hydrodynamic thrust model (HDTM) 600 may receiver sensor data 680. The sensor data 680 may originate for sensors operationally connected to thruster units, vessel hull, engine or any other operational part. Sensor data 680 may also comprise data from vessel data system or reference data from remote apparatus or server, for example.

In an embodiment, each thruster unit may be modelled by the model 600 for different positive and negative steering angles.

In an embodiment, based on vessel lay-out 605 (V) and thruster-locations 605 (T) actual unit performance 610 for 360-degree azimuth angle as well as the forbidden zones are determined. Based on the forbidden zone input data, allowed azimuth angles are determined for given input angle (A) (methodology to determine allowed angle in case of adjustment of steering angle with either positive of negative steering). The unit specific thrust vector 630 may be associated with angle (A) and load (L), for example. Then thrust allocation algorithm (max-thrust) is configured to determine the total generated thrust 640, based on the detailed hydrodynamic thruster performance input (unit thrust - thruster-interaction losses) as function of the thruster azimuth angle. Generated side-force 640, 650 (ST) (perpendicular to thrust-demand direction) and vessel yaw-moment 640, 650 (YM) are calculated as well. ST and YM can be determined for each thruster unit 650 and/or for all thruster units 640 combined. For each unit the impact of dynamic adjustment 660 of steering angle (A±) (positive or negative) on the side-force and on the yaw-moment 650 is determined. For each unit the impact of dynamic adjustment 660 of the thruster-load (L±) (thrust-magnitude) on the side-force and on the yaw-moment is determined. Based on the results, the most effective adjustment 660 (A±) and (L±) for each unit is selected and the process is repeated until the side-force (ST) and yaw-moment (YM) have been eliminated. For the maximum thrust option the elimination of side force and yaw-moment is primarily achieved with thruster-steering angle adjustments.

In an embodiment, the hydrodynamic thrust model (HDTM) 600 is configured to receive data 680 from a plurality of sensors by changing orientation of each thruster unit so that steering angle of the marine vessel is maintained. The hydrodynamic thrust model (HDTM) 600 is configured to determine side force information and yaw moment information for each thruster unit, and to determine optimum thrust vector information for each thrust unit using the hydrodynamic thrust model, the side force information and the yaw moment information.

In an embodiment, the hydrodynamic thrust model (HDTM) 600 may be configured to operate as digital twin for the marine vessel and enabling optimization of marine vessel thrust allocation for a plurality of thruster units.

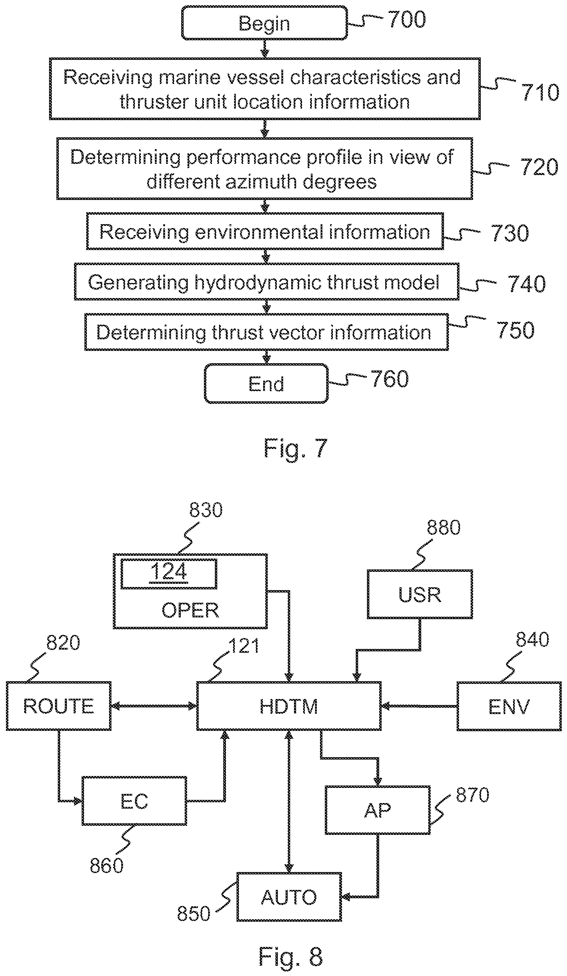

Fig. 7 shows a flow diagram showing operations in accordance with an example embodiment of the invention. In step 700, a computer-implemented method for optimizing marine vessel thrust allocation for a plurality of thruster units is started.

In step 710, marine vessel characteristics and thruster unit location information are received. In step 720, performance profile in view of different azimuth degrees for each thruster unit is determined based on the marine vessel characteristics and thruster unit location information, wherein the performance profile comprises thruster restriction zone information. In step 730, environmental information is received. In step 740, a hydrodynamic thrust model is generated by combining performance profiles of active thruster units and the environmental information. In step 750, thrust vector information is determined for each active thruster unit based on the hydrodynamic thrust model. Vessel steering angle may be used when determining thrust vector information. The method is ended in step 760.

Fig. 8 shows a schematic picture of a hydrodynamic thrust model (HDTM) 121 and related information flows according to an example embodiment.

Elements 820-880 may have alternative ways to connect with each other and Fig. 8 only shows one example embodiment. Furthermore, only connections that may relate somehow to the hydrodynamic thrust model (HDTM) 121, are illustrated. For example, environmental information 840 may also be used for route planning and thus for the route plan information 820 but direct connection between blocks 820 and 840 is not shown for simplifying the Fig. 8.

The hydrodynamic thrust model (HDTM) 121 can be configured to operate as a stand-alone solution or as an integrated part of the data management system of the marine vessel. The hydrodynamic thrust model (HDTM) 121 enables automation and further enables a higher degree of autonomous operation on board marine vessels and paves the way for data management for autonomous marine vessels.

In an embodiment, the hydrodynamic thrust model (HDTM) 121 is interfaced with the navigation system, automation system, power management system and sub-systems like thruster units, engines and generators, as shown in Fig. 1, for example. The hydrodynamic thrust model (HDTM) 121 may further be configured to receive and manage information about the health status of sub-systems directly or through the power management and automation systems. The hydrodynamic thrust model (HDTM) 121 can generate tasks and/or instructions for the thruster units, automation and power management systems based on input data, such as sensor data from the thruster units and engine(s) of the marine vessel.

The hydrodynamic thrust model (HDTM) 121 is arranged to receive characteristic information 830 representing at least one operating characteristic of the marine vessel. The operating characteristic information 830 may comprise at least one of the following: sensor data 124 relating to thruster units, information on currently active propulsion system; status information of energy generation sub-system; and status information of energy storage sub-system, such as a battery system.

The hydrodynamic thrust model (HDTM) 121 may further be arranged to receive route plan information 820 including information like weather forecasts, navigation information for the dedicated route, waypoint information for the dedicated route, emission restricted areas, environmental restrictions and other relevant information. The route plan information 820 may be received from the navigation system of the marine vessel system or the route plan information 820 may be generated by the control apparatus 120. The route plan information 820 may comprise at least one of the following: navigation information; and environmental information. The navigation information may comprise at least one of the following: destination information of the dedicated route; remaining travel time of the dedicated route; remaining distance of the dedicated route; navigation information for the dedicated route; waypoint information for the dedicated route; emission restricted area information of the dedicated route; and environmental restriction information of the dedicated route.

Energy consumption information 860 associated to the dedicated route may be determined using the route plan information 820. The energy consumption information 860 relates to predicted energy consumption of at least one of the following: hotel load of the marine vessel, at least one thruster unit of the marine vessel, and automation system of the marine vessel. The hotel load may represent load relating to at least one of lighting, heating, ventilation and fresh water generation during the dedicated voyage. Thus, hotel load may relate to any electrical load caused by all systems on a vehicle (especially a marine vessel) other than propulsion. Energy consumption information 860 may comprise planned energy consumption in relation to different tasks and health status information and availability of the vessel systems during the voyage and used as an input for the hydrodynamic thrust model (HDTM) 121. The energy consumption information 860 may be used as input by hydrodynamic thrust model (HDTM) 121.

In an embodiment, the hydrodynamic thrust model (HDTM) 121 may be configured to automate interaction between navigational route planning and service planning. Such operation may include scheduling of service actions in view of the planned route.

In an embodiment, the control apparatus 120 (see e.g. Fig. 1) may be configured to determine a task relating to the route plan information 820 automatically based on the hydrodynamic thrust model (HDTM) 121. Thus, the route plan information 820 that is determined for a dedicated route, may be dynamically adjusted automatically using the hydrodynamic thrust model (HDTM) 121.

In an embodiment, the control apparatus 120 (see e.g. Fig. 1) may be configured to dynamically adjust navigation information of the route plan information. Furthermore, the control apparatus may be configured to dynamically adjust navigation information for the dedicated route, and, for example, dynamically adjusting waypoint information for the dedicated route.

In an embodiment, the control apparatus 120 (see e.g. Fig. 1) may be configured to dynamically adjust destination information, service plan information or remaining travel time of the dedicated route.

The hydrodynamic thrust model (HDTM) 121 may further be arranged to receive environmental information 840 separate or in addition to possible environmental information included in the route plan information 820. The environmental information 840 may represent at least one current environmental characteristic of the marine vessel, such as weather information; wind information; air pressure information; ice information; wave height, frequency or direction information; tidal data; current information; water temperature information; water saline level information; and roll or pitch information.

In an embodiment, the control apparatus 120 (see e.g. Fig. 1) is configured to schedule services or adjust engine operation parameters using a determined task automatically based on the hydrodynamic thrust model (HDTM) 121.

In an embodiment, the hydrodynamic thrust model (HDTM) 121 may generate at least one task for controlling an automation element of the automation system 850 of the marine vessel automatically based on the hydrodynamic thrust model (HDTM) 121 and control the associated automation element of the marine vessel automation system 850 based on the determined task.

In an embodiment, the automation element of the marine vessel automation system 850 is configured to control at least one of the following: thruster unit azimuth angle, thruster load or tilt angle, power management system of the marine vessel and navigation system of the marine vessel. The automation element may be configured to control, for example, power management system of the marine vessel for at least one of the following: schedule for adjusting load or operating set point of the engine, schedule for changing propulsion power source; schedule for changing used fuel; schedule for activating exhaust gas cleaning system (e.g. SOx cleaner and/or SCR for NOx cleaner); and schedule for operating HVAC (Heating, Ventilation and Air Conditioning). The automation element may also be configured to control, for example, power management system of the marine vessel for schedule for changing operating modes of combustion engine(s) or other power sources.

In an embodiment, a control apparatus 120 (see e.g. Fig. 1) processing the hydrodynamic thrust model (HDTM) 121 is configured to receive confirmation of the task being performed from an automation element 850 being controlled by the task, and to update the hydrodynamic thrust model (HDTM) 121 based on the route plan information, the energy consumption information and the characteristic information in response to the received confirmation.

In an embodiment, the hydrodynamic thrust model (HDTM) 121 may generate automation plan (AP) 870 and utilize the automation plan (AP) 870 for determining control tasks within the marine vessel automatically based on the hydrodynamic thrust model (HDTM) 121.

While cruising and performing transit during the voyage, the hydrodynamic thrust model (HDTM) 121 maintains a dynamic and up-to-date situational awareness in relation to the executed route (navigation) and energy route plan and the continued health status from all energy consumers, producers and data system elements. If the situation changes and a system health status changes, the hydrodynamic thrust model (HDTM) 121 may be configured to update the automation plan 870 including tasks and automatically notifying the marine vessel data system to modify the marine vessel related information, such as route plan 820, accordingly.

Because the hydrodynamic thrust model (HDTM) 121 has access to information about optimal operation conditions of the sub-systems, the model can help to avoid stressing engines, thruster units, generators and other subsystems, as the safety limit parameters are known to the hydrodynamic thrust model (HDTM) 121. An operating mode may be used wherein only confirmed request from the operator is needed, and the hydrodynamic thrust model (HDTM) 121 may allow running sub-systems outside the optimal operation conditions.

The automation plan 870 information can be provided in a first mode as a schedule made available to the engineers to follow. The engineers may perform the scheduled tasks for the automation system 850 based on the plan 870. In a second mode, the automation plan 870 may be embedded in the main display of the engine control room and the power management system, for example. The automation system may be further configured to provide an integrated guidance tool to prompt the operator when a task should take place and by acknowledgement from the operator enable and perform the task and end the task when performed. A third mode allows a fully automated solution, where the operator may only be informed about the automation plan 870 or the tasks determined by the hydrodynamic thrust model (HDTM) 121. Optionally, current status of the model and next steps may be informed to the operator but the hydrodynamic thrust model (HDTM) 121 is configured to control automation elements automatically. In such embodiment the automation plan 870 may be optional.

It is possible to override the hydrodynamic thrust model (HDTM) 121 by changing it to standby mode and allowing a manual operation of the thruster units, power management, automation systems and the sub-systems. At the third mode, the hydrodynamic thrust model (HDTM) 121 can operate autonomously together with the navigation system and all the sub-systems. Instead of notifying the operator, the hydrodynamic thrust model (HDTM) 121 may log (e.g. using the automation plan 870) the activities and events and will only request assistance from the mission controller or a human operator in case the hydrodynamic thrust model (HDTM) 121 is facing a situation it cannot handle or it is not available for operation.

In an embodiment, the automation plan 870 may also comprise automatic information being sent to port authority system for approaching arrival. The information being sent may relate to, for example, estimate of services needed, or power and/or energy required while staying at berth. By doing that the harbor authorities can make a better estimate the spare parts and labor, and how much electricity they need to buy on the spot market for the vessel about to be docked.

In an embodiment, the hydrodynamic thrust model (HDTM) 121 is configured to receive input from an operator (USR) 880 either on-board the vessel or remote at other vessel or ground station, for example. In certain pre-defined operating modes or tasks, it may be required that operator acknowledgement is received from the operator (USR) 880 for the determined thruster setting, for adjusting other inputs for the model for determined task the hydrodynamic thrust model (HDTM) 121 before controlling an automation element of the marine vessel based on the determined task in response to the received operator acknowledgement. The user input 880 may be provided by an insight application discussed earlier.

In an embodiment, the hydrodynamic thrust model (HDTM) 121 may be updated in real-time based on the sensor data 124, other characteristic information 830 and user input 880, for example.

In an embodiment, in autonomous vessel operation mode, automatic route planning may be executed to provide the route plan information 820 for a safe and optimized route taking into account planned destination and ETA, up to date chart data from the ECDIS, draft of the vessel, predicted environmental conditions (ocean current, wind and sea state) as well as status information's from the power and propulsion plant. Furthermore, a contingency plan to stop the vessel safely in case of emergency is generated along the route for every leg or even leg segment, for example. The approval mechanisms of the route plan 820 may vary depending on autonomy level in use, authority rule sets and customer specifications. Once the route plan is activated and being executed by the Integrated Navigation / DP System (Trackpilot, Speedpilot, DP), the control system is permanently monitoring and adapting the route execution with regards to track- and schedule keeping) if necessary. Reasons for adaptation can be, for example: new destination and/or new ETA, differences between predicted and real environmental conditions, collision avoidance maneuvers, and unexpected changes in the propulsion / power system (i.e. unforeseen equipment failure).

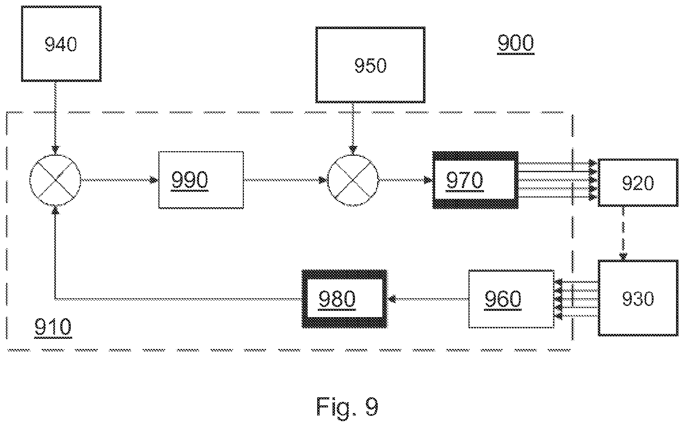

Fig. 9 shows a schematic picture of a closed loop controller block diagram 1000 according to an example embodiment of the invention.

A control processor of a vessel control apparatus 120 may comprise a closed loop controller 910 to operate the hydrodynamic thrust model (HDTM) with interfaces and inputs needed to control the thruster units. The control apparatus 120 of the vessel may comprise a rack of IO 920 that is used to interface with thruster units of the marine vessel. Position, heading and sensor data interface 930 is shown, as well as position and heading setpoint information 940 and environmental data 950, for example.

The control processor comprises the closed loop controller 910 that works in tandem with a sensor processing module 960 and a Thruster Allocation Logic (TAL) module 970. In simple terms the closed loop controller 910 is used to maintain the vessel over position and heading setpoints based on position and heading setpoint information 940 that may be pre-programmed and accessible in relation to waypoints of harbor track information. For station keeping the setpoint would consist of a fixed location and bearing, however for transit and docking operations the setpoint consists of a position and heading that is constantly changing as it is moved along a track between a series of waypoints. As the setpoint is moved, the closed loop controller 910 will calculate the difference between the setpoint 940 and actual target vessel position and will use this to calculate thruster vectors required to close the distance between the two positions and to minimize side forces and yaw-moments. The actual target vessel position is calculated based on position, heading and sensor data 930, processed by the sensor processing module 960 to provide position estimate that is filtered by a Kalman filter module 980 to provide the position and heading estimate to be compared with the setpoint 940. A force vector may be determined by a proportional-integral-derivative controller (PID controller or three term controller) 990 that is translated into actual thruster commands (after subtracting environmental data 950, such as external forces like wind) by a Thruster Allocation Logic (TAL) 970, and the IO rack 920 is then used to communicate these commands to each thruster unit. The position, heading and sensor data 930 may be received from a plurality of sources, such as from the target vessel position and heading sensor system, from the thruster unit shaft sensors and vessel sensor system, or any combination of them. Any position, heading or sensor system data that may be used for determining position, heading, side force or yaw-moment information of the vessel may be used.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims.

Without in any way limiting the scope, interpretation, or application of the claims appearing below, a technical effect of one or more of the example embodiments disclosed herein is improved method and apparatus for automated marine vessel thruster unit control. Another technical effect of one or more of the example embodiments disclosed herein is improved method and apparatus for automated/autonomous marine vessel operation.

Another technical effect of one or more of the example embodiments disclosed herein is that it enables performing the thruster unit optimization automatically in the safest and most efficient way possible. The procedure means that as the vessel is in transit mode, the control apparatus is programmed with all the relevant variables, such as vessel characteristics, thruster unit data, wind speed, weight, pitch, roll, water depth and current. This data enables it to perform the thruster unit control automatically in the safest and most efficient way possible. The operator may control the system using a control device, such as joystick. Optionally, while the operator may have oversight, the control may be principally handled by software in autonomous mode.

Another technical effect of one or more of the example embodiments disclosed herein is that safety is improved since there is less likelihood of human error; less wear and tear since the thrusters are efficiently utilized; and greater efficiency in which allows more time at berth or at operation.

Although various aspects of the invention are set out in the independent claims, other aspects of the invention comprise other combinations of features from the described embodiments and/or the dependent claims with the features of the independent claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. Computer-implemented method (700) for optimizing marine vessel thrust allocation for a plurality of thruster units (291, 310, 320, 510-517), the method (700) comprising:
receiving (710) marine vessel characteristics and thruster unit location information;
determining (720) performance profile (610) in view of different azimuth degrees for each thruster unit (291, 310, 320, 510-517) based on the marine vessel characteristics and thruster unit location information;
receiving (730) environmental information (620, 840);
generating (740) a hydrodynamic thrust model (121, 400, 600) by combining performance profiles (610) of active thruster units (291, 310, 320, 510-517) and the environmental information (620, 840); and
determining (750) thrust vector information (630) for each active thruster unit (291, 310, 320, 510-517) based on the hydrodynamic thrust model (121, 400, 600),
**characterized in that** the performance profile (610) comprises thruster restriction zone information and wherein the method comprises determining thruster-hull interference values through 360 azimuth degrees for each thruster unit based on the hydrodynamic thrust model.

2. The method of claim 1, wherein the thruster unit location information comprises at least one of the following:
position of the thruster unit in at least two horizontal dimensions relative to a hull of the marine vessel;
thruster tilt angle information; and
thruster vertical position relative to the hull of the marine vessel.

3. The method of any claim 1 to 2, further comprising:
determining allowed azimuth angle information for each thruster unit based on the performance profile; and
providing the allowed azimuth angle information as input to the hydrodynamic thrust model.

4. The method of any claim 1 to 3, further comprising:
receiving steering information;
determining thrust vector information based on the steering information and the hydrodynamic thrust model; and
controlling at least one thrust unit based on the thrust vector information.

5. The method of any claim 1 to 4, wherein the hydrodynamic thrust model is configured to optimize marine vessel thrust allocation through 360 azimuth degrees for each thruster unit.

6. The method of any claim 1 to 5, further comprising:
determining thruster-thruster interference values through 360 azimuth degrees for each thruster unit based on the hydrodynamic thrust model.

7. The method of any claim 1 to 6, further comprising:
generating a digital twin for the marine vessel based on the hydrodynamic thrust model.

8. The method of claim 7, wherein the digital twin is configured to model operation of the plurality of thruster units arranged to the marine vessel.

9. The method of any claim 1 to 8, further comprising:
receiving data from a plurality of sensors by changing orientation of each thruster unit so that steering angle of the marine vessel is maintained;
determining side force information and yaw moment information for each thruster unit; and
determining optimum thrust vector information for each thrust unit using the hydrodynamic thrust model, the side force information and the yaw moment information.

10. The method of any claim 1 to 9, further comprising:
receiving data from a plurality of sensors operationally arranged to the marine vessel to provide sensor data and maintaining the sensor data within a data storage system;
determining side force information and yaw moment information for each thruster unit based on the received data; and
determining optimum thrust vector information for each thrust unit using the hydrodynamic thrust model, the side force information and the yaw moment information, by minimizing the side force information and the yaw moment information according to the sensor data.

11. The method of any claim 1 to 10, wherein the hydrodynamic thrust model is configured to determine unit specific thrust vector information; determine total generated thrust information for all thruster units as a function of a thruster azimuth angle; and determine generated side-force and vessel yaw-moment based on the total generated thrust information.

12. The method of claim 11, wherein the hydrodynamic thrust model is further configured to determine, for each thruster unit, an impact of a dynamic adjustment of steering angle on the side-force and on the yaw-moment.

13. The method of claim 12, wherein based on the determined impact for the dynamic adjustment of different angles, an optimal adjustment for each thruster unit is selected.

14. A control apparatus (120) for optimizing marine vessel thrust allocation for a plurality of thruster units (291, 310, 320, 510-517), comprising:
a communication interface (250);
at least one processor (210); and
at least one memory (220) including computer program code (230, 231);
the at least one memory (220) and the computer program code (230, 231) configured to, with the at least one processor (210), cause the apparatus (120) to:
receive marine vessel characteristics and thruster unit location information;
determine performance profile (610) in view of different azimuth degrees for each thruster unit (291, 310, 320, 510-517) based on the marine vessel characteristics and thruster unit location information;
receive environmental information (620, 840);
generate a hydrodynamic thrust model (121, 400, 600) by combining performance profiles (610) of active thruster units (291, 310, 320, 510-517) and the environmental information (620, 840); and
determine thrust vector information (630) for each active thruster unit (291, 310, 320, 510-517) based on the hydrodynamic thrust model (121, 400, 600),
**characterized in that** the performance profile (610) comprises thruster restriction zone information and wherein the apparatus is caused to determine thruster-hull interference values through 360 azimuth degrees for each thruster unit based on the hydrodynamic thrust model.

15. A computer program embodied on a computer readable medium (220) comprising computer executable program code (230, 231), which code (230, 231), when executed by at least one processor (210) of an apparatus (120), causes the apparatus (120) to:
receive marine vessel characteristics and thruster unit location information;
determine performance profile (610) in view of different azimuth degrees for each thruster unit (291, 310, 320, 510-517) based on the marine vessel characteristics and thruster unit location information;
receive environmental information (620, 840);
generate a hydrodynamic thrust model (121, 400, 600) by combining performance profiles (610) of active thruster units (291, 310, 320, 510-517) and the environmental information (620, 840); and
determine thrust vector information (630) for each active thruster unit (291, 310, 320, 510-517) based on the hydrodynamic thrust model (121, 400, 600) ,
**characterized in that** the performance profile (610) comprises thruster restriction zone information and wherein the apparatus is caused to determine thruster-hull interference values through 360 azimuth degrees for each thruster unit based on the hydrodynamic thrust model.

## Patentansprüche

1. Computerimplementiertes Verfahren (700) zur Optimierung der Schubverteilung von Schiffen für eine Vielzahl von Schubdüseneinheiten (291, 310, 320, 510-517), wobei das Verfahren (700) Folgendes umfasst:
Empfangen (710) von Schiffseigenschaften und Informationen zum Standort der Schubdüseneinheiten;
Bestimmen (720) eines Leistungsprofils (610) im Hinblick auf unterschiedliche Azimutgrade für jede Schubdüseneinheit (291, 310, 320, 510-517) basierend auf den Schiffseigenschaften und Informationen zum Standort der Schubdüseneinheiten;
Empfangen (730) von Umweltinformationen (620, 840);
Erzeugen (740) eines hydrodynamischen Schubmodells (121, 400, 600) durch Kombinieren von Leistungsprofilen (610) aktiver Schubdüseneinheiten (291, 310, 320, 510-517) und der Umgebungsinformationen (620, 840); und
Bestimmen (750) von Schubvektorinformationen (630) für jede aktive Schubdüseneinheit (291, 310, 320, 510-517) basierend auf dem hydrodynamischen Schubmodell (121, 400, 600),
**dadurch gekennzeichnet, dass** das Leistungsprofil (610) Informationen zur Schubdüsenbeschränkungszone umfasst und dass das Verfahren das Bestimmen von Schubdüse-Rumpf-Interferenzwerten über 360 Azimutgrad für jede Schubdüseneinheit basierend auf dem hydrodynamischen Schubmodell umfasst.

2. Verfahren nach Anspruch 1, wobei die Positionsinformationen der Schubdüseneinheit mindestens eines der folgenden umfassen:
Position der Schubdüseneinheit in mindestens zwei horizontalen Dimensionen relativ zu einem Rumpf des Schiffs;
Informationen zum Neigungswinkel der Schubdüse; und
vertikale Position der Schubdüse relativ zum Rumpf des Schiffs.

3. Verfahren nach Anspruch 1 bis 2, weiterhin umfassend:
Bestimmen der zulässigen Azimutwinkelinformationen für jede Schubdüseneinheit basierend auf dem Leistungsprofil; und
Bereitstellen der zulässigen Azimutwinkelinformationen als Eingabe für das hydrodynamische Schubmodell.

4. Verfahren nach einem der Ansprüche 1 bis 3, weiterhin umfassend:
Empfangen von Lenkinformationen;
Bestimmen von Schubvektorinformationen auf der Grundlage der Lenkinformationen und des hydrodynamischen Schubmodells; und
Steuern von mindestens einer Schubdüseneinheit auf der Grundlage der Schubvektorinformationen.

5. Verfahren nach einem der Ansprüche 1 bis 4, wobei das hydrodynamische Schubmodell dazu konfiguriert ist, die Schubverteilung des Schiffs für jede Schubdüseneinheit über einen Azimutwinkel von 360 Grad zu optimieren.

6. Verfahren nach einem der Ansprüche 1 bis 5, weiterhin umfassend:
Bestimmen von Schubdüsen-Schubdüsen-Interferenzwerten über 360 Azimutgrad für jede Schubdüseneinheit basierend auf dem hydrodynamischen Schubmodell.

7. Verfahren nach einem der Ansprüche 1 bis 6, weiterhin umfassend:
Erzeugen eines digitalen Zwillings für das Schiff basierend auf dem hydrodynamischen Schubmodell.

8. Verfahren nach Anspruch 7, wobei der digitale Zwilling so konfiguriert ist, dass er den Betrieb der Vielzahl von Schubdüseneinheiten modelliert, die am Schiff angeordnet sind.

9. Verfahren nach einem der Ansprüche 1 bis 8, weiterhin umfassend:
Empfangen von Daten von einer Vielzahl von Sensoren durch Ändern der Ausrichtung jeder Schubdüseneinheit, so dass der Lenkwinkel des Schiffs beibehalten wird;
Bestimmen von Seitenkraftinformationen und Giermomentinformationen für jede Schubdüseneinheit; und
Bestimmen von optimalen Schubvektorinformationen für jede Schubdüseneinheit unter Verwendung des hydrodynamischen Schubmodells, der Seitenkraftinformationen und der Giermomentinformationen.

10. Verfahren nach einem der Ansprüche 1 bis 9, weiterhin umfassend:
Empfangen von Daten von einer Vielzahl von Sensoren, die betriebsmäßig am Schiff angeordnet sind, um Sensordaten bereitzustellen, und Aufbewahren der Sensordaten in einem Datenspeichersystem;
Bestimmen von Seitenkraftinformationen und Giermomentinformationen für jede Schubdüseneinheit auf der Grundlage der empfangenen Daten; und
Bestimmen von optimalen Schubvektorinformationen für jede Schubdüseneinheit unter Verwendung des hydrodynamischen Schubmodells, der Seitenkraftinformationen und der Giermomentinformationen, indem die Seitenkraftinformationen und die Giermomentinformationen entsprechend den Sensordaten minimiert werden.

11. Verfahren nach einem der Ansprüche 1 bis 10, wobei das hydrodynamische Schubmodell dazu konfiguriert ist, einheitenspezifische Schubvektorinformationen zu ermitteln, Informationen zum insgesamt erzeugten Schub für alle Schubeinheiten als Funktion eines Schubazimutwinkels zu ermitteln und die erzeugte Seitenkraft und das Giermoment des Schiffes auf der Grundlage der Informationen zum insgesamt erzeugten Schub zu ermitteln.

12. Verfahren nach Anspruch 11, wobei das hydrodynamische Schubmodell ferner dazu konfiguriert ist, für jede Schubeinheit eine Auswirkung einer dynamischen Anpassung des Lenkwinkels auf die Seitenkraft und das Giermoment zu bestimmen.

13. Verfahren nach Anspruch 12, wobei basierend auf den ermittelten Auswirkungen für die dynamische Einstellung verschiedener Winkel eine optimale Einstellung für jede Schubdüseneinheit ausgewählt wird.

14. Steuervorrichtung (120) zur Optimierung der Schubverteilung von Schiffen für eine Vielzahl von Schubdüseneinheiten (291, 310, 320, 510-517), umfassend:
eine Kommunikationsschnittstelle (250);
mindestens einen Prozessor (210);
und
mindestens einen Speicher (220), der Computerprogrammcode (230, 231) enthält;
der mindestens eine Speicher (220) und der Computerprogrammcode (230, 231) sind so konfiguriert, dass sie zusammen mit dem mindestens einen Prozessor (210) die Vorrichtung (120) veranlassen, Schiffseigenschaften und Informationen zum Standort der Schubdüseneinheit zu empfangen;
ein Leistungsprofil (610) im Hinblick auf unterschiedliche Azimutgrade für jede Schubdüseneinheit (291, 310, 320, 510-517) basierend auf den Schiffseigenschaften und Informationen zum Standort der Schubdüseneinheit zu bestimmen;
Umgebungsinformationen (620, 840) zu empfangen;
Erzeugen eines hydrodynamischen Schubmodells (121, 400, 600) durch Kombinieren von Leistungsprofilen (610) aktiver Schubdüseneinheiten (291, 310, 320, 510-517) und der Umgebungsinformationen (620, 840); und
Bestimmen von Schubvektorinformationen (630) für jede aktive Schubdüseneinheit (291, 310, 320, 510-517) basierend auf dem hydrodynamischen Schubmodell (121, 400, 600),
**dadurch gekennzeichnet, dass** das Leistungsprofil (610) Informationen zur Schubdüsenbeschränkungszone umfasst und dass die Vorrichtung veranlasst wird, Schubdüse-Rumpf-Interferenzwerte über 360 Azimutgrad für jede Schubdüseneinheit basierend auf dem hydrodynamischen Schubmodell zu bestimmen.

15. Computerprogramm, das auf einem computerlesbaren Medium (220) verkörpert ist und computerausführbaren Programmcode (230, 231) umfasst, wobei der Code (230, 231), wenn er von mindestens einem Prozessor (210) einer Vorrichtung (120) ausgeführt wird, die Vorrichtung (120) dazu veranlasst:
Informationen zu Schiffseigenschaften und Standortinformationen zu Schubdüseneinheiten zu empfangen;
ein Leistungsprofil (610) im Hinblick auf unterschiedliche Azimutgrade für jede Schubdüseneinheit (291, 310, 320, 510-517) basierend auf den Schiffseigenschaften und Standortinformationen zu Schubdüseneinheiten zu bestimmen;
Umgebungsinformationen (620, 840) zu empfangen;
Erzeugen eines hydrodynamischen Schubmodells (121, 400, 600) durch Kombinieren von Leistungsprofilen (610) aktiver Schubdüseneinheiten (291, 310, 320, 510-517) und der Umgebungsinformationen (620, 840); und
Bestimmen von Schubvektorinformationen (630) für jede aktive Schubdüseneinheit (291, 310, 320, 510-517) basierend auf dem hydrodynamischen Schubmodell (121, 400, 600),
**dadurch gekennzeichnet, dass** das Leistungsprofil (610) Schubdüsenbeschränkungszoneninformationen umfasst und dass die Vorrichtung veranlasst wird, Schubdüse-Rumpf-Interferenzwerte über 360 Azimutgrad für jede Schubdüseneinheit basierend auf dem hydrodynamischen Schubmodell zu bestimmen.

## Revendications

1. Procédé mis en œuvre par ordinateur (700) pour optimiser l'attribution de poussée de navire marin pour une pluralité d'unités de propulseurs (291, 310, 320, 510-517), le procédé (700) comprenant :
la réception (710) de caractéristiques de navire marin et d'informations de localisation d'unités de propulseurs ;
la détermination (720) d'un profil de performance (610) en fonction de différents degrés d'azimut pour chaque unité de propulseur (291, 310, 320, 510-517) sur la base des caractéristiques de navire marin et des informations de localisation d'unités de propulseurs ;
la réception (730) d'informations environnementales (620, 840) ;
la génération (740) d'un modèle de poussée hydrodynamique (121, 400, 600) en combinant des profils de performance (610) d'unités de propulseurs (291, 310, 320, 510-517) actives et les informations environnementales (620, 840) ; et
la détermination (750) d'informations de vecteur de poussée (630) pour chaque unité de propulseur (291, 310, 320, 510-517) active sur la base du modèle de poussée hydrodynamique (121, 400, 600),
**caractérisé en ce que** le profil de performance (610) comprend des informations de zone de restriction de propulseur et dans lequel le procédé comprend la détermination de valeurs d'interférence coque-propulseur sur 360 degrés d'azimut pour chaque unité de propulseur sur la base du modèle de poussée hydrodynamique.

2. Procédé selon la revendication 1, dans lequel les informations de localisation d'unités de propulseurs comprennent au moins l'une parmi :
une position de l'unité de propulseur dans au moins deux dimensions horizontales par rapport à une coque du navire marin ;
des informations d'angle d'inclinaison de propulseur ; et
une position verticale de propulseur par rapport à la coque du navire marin.

3. Procédé selon l'une quelconque des revendications 1 et 2, comprenant en outre :
la détermination d'informations d'angle d'azimut autorisé pour chaque unité de propulseur sur la base du profil de performance ; et
la fourniture des informations d'angle d'azimut autorisé comme entrée au modèle de poussée hydrodynamique.

4. Procédé selon l'une quelconque des revendications 1 à 3, comprenant en outre :
la réception d'informations de direction ;
la détermination d'informations de vecteur de poussée sur la base des informations de direction et du modèle de poussée hydrodynamique ; et
la commande d'au moins une unité de poussée sur la base des informations de vecteur de poussée.

5. Procédé selon l'une quelconque des revendications 1 à 4, dans lequel le modèle de poussée hydrodynamique est configuré pour optimiser l'attribution de poussée de navire marin sur 360 degrés d'azimut pour chaque unité de propulseur.

6. Procédé selon l'une quelconque des revendications 1 à 5, comprenant en outre :
la détermination de valeurs d'interférence propulseur-propulseur sur 360 degrés d'azimut pour chaque unité de propulseur sur la base du modèle de poussée hydrodynamique.

7. Procédé selon l'une quelconque des revendications 1 à 6, comprenant en outre :
la génération d'un jumeau numérique du navire marin sur la base du modèle de poussée hydrodynamique.

8. Procédé selon la revendication 7, dans lequel le jumeau numérique est configuré pour modéliser le fonctionnement de la pluralité d'unités de propulseurs agencées sur le navire marin.

9. Procédé selon l'une quelconque des revendications 1 à 8, comprenant en outre :
la réception de données provenant d'une pluralité de capteurs en changeant l'orientation de chaque unité de propulseur de sorte que l'angle de direction du navire marin soit maintenu ;
la détermination d'informations de force latérale et d'informations de moment de lacet pour chaque unité de propulseur ; et
la détermination d'informations de vecteur de poussée optimal pour chaque unité de poussée en utilisant le modèle de poussée hydrodynamique, les informations de force latérale et les informations de moment de lacet.

10. Procédé selon l'une quelconque des revendications 1 à 9, comprenant en outre :
la réception de données provenant d'une pluralité de capteurs agencés de manière opérationnelle sur le navire marin pour fournir des données de capteur et conserver les données de capteur dans un système de stockage de données ;
la détermination d'informations de force latérale et d'informations de moment de lacet pour chaque unité de propulseur sur la base des données reçues ; et
la détermination d'informations de vecteur de poussée optimal pour chaque unité de poussée en utilisant le modèle de poussée hydrodynamique, les informations de force latérale et les informations de moment de lacet, en minimisant les informations de force latérale et les informations de moment de lacet en fonction des données de capteur.

11. Procédé selon l'une quelconque des revendications 1 à 10, dans lequel le modèle de poussée hydrodynamique est configuré pour déterminer des informations de vecteur de poussée spécifique à l'unité ; déterminer des informations de poussée totale générée pour toutes les unités de propulseurs en fonction d'un angle d'azimut de propulseur ; et déterminer une force latérale et un moment de lacet de navire générés sur la base des informations de poussée totale générée.

12. Procédé selon la revendication 11, dans lequel le modèle de poussée hydrodynamique est en outre configuré pour déterminer, pour chaque unité de propulseur, un impact d'un réglage dynamique d'angle de direction sur la force latérale et sur le moment de lacet.

13. Procédé selon la revendication 12, dans lequel, sur la base de l'impact déterminé pour le réglage dynamique de différents angles, un réglage optimal pour chaque unité de propulseur est sélectionné.

14. Appareil de commande (120) permettant d'optimiser l'attribution de poussée de navire marin pour une pluralité d'unités de propulseurs (291, 310, 320, 510-517), comprenant :
une interface de communication (250) ;
au moins un processeur (210) ; et
au moins une mémoire (220) comportant un code de programme informatique (230, 231) ;
l'au moins une mémoire (220) et le code de programme informatique (230, 231) étant configurés pour, avec l'au moins un processeur (210), amener l'appareil (120) à :
recevoir des caractéristiques de navire marin et des informations de localisation d'unités de propulseurs ;
déterminer un profil de performance (610) en fonction de différents degrés d'azimut pour chaque unité de propulseur (291, 310, 320, 510-517) sur la base des caractéristiques de navire marin et des informations de localisation d'unités de propulseurs ;
recevoir des informations environnementales (620, 840) ;
générer un modèle de poussée hydrodynamique (121, 400, 600) en combinant des profils de performance (610) d'unités de propulseurs (291, 310, 320, 510-517) actives et les informations environnementales (620, 840) ; et
déterminer des informations de vecteur de poussée (630) pour chaque unité de propulseur (291, 310, 320, 510-517) active sur la base du modèle de poussée hydrodynamique (121, 400, 600),
**caractérisé en ce que** le profil de performance (610) comprend des informations de zone de restriction de propulseur et dans lequel l'appareil est amené à déterminer des valeurs d'interférence coque-propulseur sur 360 degrés d'azimut pour chaque unité de propulseur sur la base du modèle de poussée hydrodynamique.

15. Programme informatique incorporé sur un support lisible par ordinateur (220) comprenant un code de programme exécutable par ordinateur (230, 231), lequel code (230, 231), lorsqu'il est exécuté par au moins un processeur (210) d'un appareil (120), amène l'appareil (120) à :
recevoir des caractéristiques de navire marin et des informations de localisation d'unités de propulseurs ;
déterminer un profil de performance (610) en fonction de différents degrés d'azimut pour chaque unité de propulseur (291, 310, 320, 510-517) sur la base des caractéristiques de navire marin et des informations de localisation d'unités de propulseurs ;
recevoir des informations environnementales (620, 840) ;
générer un modèle de poussée hydrodynamique (121, 400, 600) en combinant des profils de performance (610) d'unités de propulseurs (291, 310, 320, 510-517) actives et les informations environnementales (620, 840) ; et
déterminer des informations de vecteur de poussée (630) pour chaque unité de propulseur (291, 310, 320, 510-517) active sur la base du modèle de poussée hydrodynamique (121, 400, 600),
**caractérisé en ce que** le profil de performance (610) comprend des informations de zone de restriction de propulseur et dans lequel l'appareil est amené à déterminer des valeurs d'interférence coque-propulseur sur 360 degrés d'azimut pour chaque unité de propulseur sur la base du modèle de poussée hydrodynamique.
